# EUROPÄISCHE PATENTSCHRIFT

(11) **EP 3 575 890 B1**
(45) Veröffentlichungstag und Bekanntmachung des Hinweises auf die Patenterteilung: **30.03.2022**
(21) Anmeldenummer: 18174558.9
(22) Anmeldetag: 28.05.2018
(51) Int. Cl.: G05B 13/02, G05B 19/418

(54) **ASSISTENZSYSTEM ZUR UNTERSTÜTZUNG DER PLANUNG VON AUTOMATISIERUNGSSYSTEMEN**
ASSISTANCE SYSTEM FOR SUPPORTING PLANNING OF AUTOMATION SYSTEMS
SYSTÈME D'AIDE À L'APPUI DE LA PLANIFICATION DE SYSTÈMES D'AUTOMATISATION

(43) Veröffentlichungstag der Anmeldung: 04.12.2019
(73) Patentinhaber: Siemens Aktiengesellschaft, 80333 München (DE)
(72) Erfinder: Runkler, Thomas, 81929 München (DE); Baus, Jürgen, 76344 Eggenstein-Leopoldshafen (DE); Rock, Michael, 76829 Landau (DE)

(56) Entgegenhaltungen:
- DE-A1-102006 056 273
- US-A1- 2008 262 810
- US-B1- 6 529 780

## Beschreibung

Die vorliegende Erfindung betrifft ein Assistenzsystem zur Unterstützung der Planung von einem Automatisierungssystem gemäß dem Patentanspruch 1.

Derartige Assistenzsysteme sind aus dem Stand der Technik bekannt. So offenbart beispielsweise die US-Veröffentlichungsschrift US2014/0337429 A1 unter anderem eine Datenbank zur Speicherung von Sets von Kunden-Daten von deren Automatisierungssystemen sowie eine Analyse-Komponente zur Analyse dieser Datensätze bezüglich Industrietypus, Anwendungstypus, verwendete Geräte, Konfigurations-Settings usw.. Zur Vereinfachung der Analyse der industriellen Daten aus verschiedenen Quellen offenbart die genannte US-Veröffentlichungsschrift eine Normierungs-Komponente, um die entsprechenden Daten zu normieren, bevor sie gespeichert oder analysiert werden.

Die DE-Veröffentlichungsschrift DE 10 2006 056273 A1 offenbart ein Verfahren, mit welchem sich beispielsweise Anlagen, Teilanlagen, Prozesse und Teilprozesse vollautomatisch einrichten lassen.

Es ist ein Nachteil des genannten Standes der Technik, dass verschiedene Automatisierungssysteme einen sehr unterschiedlichen Aufbau haben können, und daher ein unmittelbarer Vergleich verschiedener Daten der einzelnen Systeme schwierig ist. Dies erschwert beispielsweise auch die Nutzung solcher Daten bei der Unterstützung der Planung oder des Einrichtens eines Automatisierungssystems. Daher ist es eine Aufgabe der vorliegenden Erfindung, eine verbesserte Vorrichtung und/oder ein verbessertes Verfahren zur Unterstützung der Planung und/oder des Einrichtens von Automatisierungssystemen zur Verfügung zu stellen.

Diese Aufgabe wird gelöst durch ein Assistenzsystem mit den Merkmalen des geltenden Patentanspruchs 1.

Durch die Verwendung von künstlicher Intelligenz und/oder maschinellem Lernen innerhalb der AI-Komponente lassen sich die vektorisierten Konfigurationsdatensätze besser verarbeiten und/oder analysieren. Insbesondere die Verwendung eines neuronalen Netzes mit einer Deep-Learning-Architektur zu diesem Zweck erleichtert die Verarbeitung und/oder Analyse der regelmäßig relativ komplexen Konfigurationsdaten eines Automatisierungssystems. Insbesondere zur Unterstützung der Planung und/oder des Einrichtens eines Automatisierungssystems können vorteilhafterweise Konfigurationsdaten möglichst vieler verschiedener Automatisierungssysteme verarbeitet und/oder analysiert werden, um so beispielsweise für möglichst viele verschiedene Anwendungsfälle des Assistenzsystems entsprechende Daten zur Unterstützung der Planung und/oder des Einrichtens eines neuen Automatisierungssystems berücksichtigen zu können. Und insbesondere beim Verarbeiten verschiedener Konfigurationsdaten aus unterschiedlichen Automatisierungssystemen kann die Heterogenität und Komplexität relativ hoch werden. Hier ist die Verwendung von künstlicher Intelligenz oder maschinellem Lernen unter Verwendung eines neuronalen Netzes mit Deep-Learning-Architektur vorteilhaft, da insbesondere Deep-Learning-Architekturen verbesserte Eigenschaften bei der Verarbeitung und/oder Analyse komplexerer Daten aufweist.

Unter einem Automatisierungssystem wird dabei jede elektronische Einrichtung und/oder Datenverarbeitungseinrichtung verstanden, welche zur Steuerung einer Maschine, eines Gerätes und/oder einer Anlage (z. B. einer Produktionsanlage) ausgebildet und eingerichtet ist. Hierbei kann es sich beispielsweise um eine oder mehrere Steuerungseinrichtungen für die Aktoren und Sensoren der verschiedenen Geräte, Maschinen und/oder Anlagenteile bzw. der Anlage handeln, insbesondere inklusive der entsprechenden Ein-Ausgabe-Einheiten für Nutzer der Anlage und/oder des Automatisierungssystems. Steuereinrichtungen können dabei beispielsweise Computer sein oder auch beispielsweise sogenannte speicherprogrammierbare Steuerungen (z.B. SPS: speicherprogrammierbare Steuerung oder PLC: "programmable logic controller"). insbesondere kann eine Steuereinrichtung als sogenannte modulare speicherprogrammierbare Steuerungen ausgestaltet und eingerichtet sein. Ein-Ausgabe-Einheiten können beispielsweise entsprechende Bedienpanels, Bedien-Terminals oder auch ganze Bediensysteme wie z. B. ein Bedienen-und-Beobachten-System sein.

Weiterhin kann einem Automatisierungssystem auch ein industrielles Kommunikationssystem oder entsprechende Komponenten dafür umfassen. So kann ein Automatisierungssystem z.B. Kommunikationseinrichtungen zur Kommunikation verschiedener Komponenten des Automatisierungssystems umfassen, wie beispielsweise sogenannte "Switche", "Router", "Firewalls" und vergleichbare Einrichtungen und/oder Netzknoten.

Die Planung und/oder das Einrichten des Automatisierungssystems kann beispielsweise die Auswahl von Komponenten des Automatisierungssystems umfassen sowie auch eine Programmierung, Parametrierung und/oder das Einrichten der verschiedenen Komponenten des Automatisierungssystems. Dabei kann die Planung und/oder das Einrichten des Automatisierungssystems beispielsweise auch das Setzen von entsprechenden Bedienparametern für an das Automatisierungssystem angeschlossene Sensoren und Aktoren und/oder das Setzen verschiedener Kommunikations-Parameter (wie z.B. Netzwerkadressen, Übertragungsraten, Kommunikationsprotokolle, ...) für die Kommunikation zwischen verschiedenen der einzelnen Komponenten des Automatisierungssystems umfassen. Auch das Erstellen von ein oder mehreren Steuerprogrammen für die Komponenten des Automatisierungssystems kann Bestandteil der Planung und/oder des Einrichtens von Automatisierungssystemen sein.

Beispielsweise kann zur Planung und/oder dem Einrichten des Automatisierungssystems ein sogenanntes "Engineering-System" verwendet werden. Dies kann beispielsweise als eine Software ausgestaltet sein, welche auf einem Computer oder Computernetzwerk oder vergleichbaren Datenverarbeitungseinrichtungen installiert sein kann, welche wiederum mit dem Automatisierungssystem kommunikativ gekoppelt sind, um entsprechende Daten, die zum Einrichten bzw. der Planung des Systems notwendig sind, aus dem Automatisierungssystem auszulesen oder entsprechende Daten im Automatisierungssystem zu setzen oder einzurichten. Dabei kann ein Computer mit einem solchen Engineeringsystem beispielsweise als ein sogenanntes "Programmiergerät" für ein Automatisierungssystem und/oder eine Steuereinrichtung eingerichtet und ausgestaltet sein.

Ein Konfigurationsdatensatz eines Automatisierungssystems kann beispielsweise die vorstehend genannten Daten - ganz oder teilweise - umfassen. Beispielsweise kann ein Konfigurationsdatensatz zu einem Automatisierungssystem Parameter-Daten zu verschiedenen Hardware-Komponenten des Automatisierungssystems umfassen. Weiterhin kann ein Konfigurationsdatensatz Parameter und/oder Daten umfassen, welche zum Einrichten und Betrieb der Kommunikation zwischen verschiedenen Komponenten des Automatisierungssystems notwendig sind bzw. verwendet werden. Zudem kann ein Konfigurationsdatensatz zu einem Automatisierungssystem beispielsweise Daten umfassen, welche zum Einrichten von Bedien-Einrichtungen und/oder -Terminals für das Automatisierungssystem verwendet werden, oder auch Daten umfassen, die zum Betrieb solcher Bedien-Einrichtungen verwendet werden.

Ein Konfigurationsdatensatz zu einem Automatisierungssystem kann weiterhin ein oder mehrere Steuerprogramme für verschiedene Komponenten bzw. Steuereinrichtungen des Automatisierungssystems umfassen. Weiterhin kann ein Konfigurationsdatensatz Daten umfassen, welche zum Betrieb solcher Steuerprogramme erforderlich sind, wie z. B. entsprechende Datenbanken, Programmbausteine, Funktionsbausteine, Programm-Parameterwerte, Umrechnungstabellen, und/oder ähnliche Daten.

Dabei kann ein Konfigurationsdatensatz jeweils einzelne oder auch sämtliche Daten der vorstehend genannten Daten-Kategorien umfassen. Auch müssen in Konfigurationsdatensätzen zu verschiedenen Automatisierungssystemen jeweils nicht sämtliche der vorgenannten Kategorien vorkommen. Zudem können auch Konfigurationsdatensätze zu verschiedenen Automatisierungs-systemen zumindest teilweise unterschiedliche der genannten Daten-Kategorien umfassen.

Ein Konfigurationsdatensatz kann dabei einzelne oder sämtliche Konfigurationsdaten zu einem vorgegebenen Automatisierungssystem umfassen.

Wird für die Planung und/oder das Einrichten des Automatisierungssystems das vorstehend genannte "Engineering-System" verwendet, so kann beispielsweise zum Planen und/oder Einrichten eines bestimmten Automatisierungssystems dafür ein sogenanntes Engineering-Projekt angelegt werden, wobei dann in diesem Fall ein Konfigurationsdatensatz Daten des Engineering-Projekts bzw. sämtliche Daten des Engineering-Projekts umfassen kann. Auch kann ein solches Engineering-Projekt eine mögliche Ausgestaltung für einen Konfigurationsdatensatzes sein.

Die Konfigurationsdatenbank kann beispielsweise die Konfigurationsdatensätze umfassen, welche beispielsweise in der Vergangenheit zu verschiedenen Automatisierungssystemen erstellt wurden. Wurde ein "Engineering-System", z.B. gemäß der vorliegenden Beschreibung, im Rahmen der Planung und/oder des Einrichtens dieser Automatisierungssysteme verwendet, so kann die Konfigurationsdatenbank beispielsweise als eine Datenbank ausgestaltet sein, welche die entsprechend zugehörigen Engineering-Projekte umfasst. Dabei entsprechen dann diese Engineering-Projekte den jeweiligen Konfigurationsdatensätzen. Die Konfigurationsdatenbank kann auch derart ausgebildet und eingerichtet sein, dass sie zu einem späteren Zeitpunkt mit weiteren Konfigurationsdatensätzen weiterer Automatisierungs-systeme erweiterbar ist, so dass dem Assistenzsystem mit fortschreitender Zeit zunehmend verschiedene Konfigurationsdatensätze unterschiedlicher Automatisierungssysteme zur Verarbeitung durch die AI-Komponente zur Verfügung steht. Auf diese Weise kann der Erfahrungsschatz des Assistenzsystems mit der Zeit vergrößert werden, was die Unterstützung bei der Planung und/oder dem Einrichten eines neuen Automatisierungs-systems weiter verbessern kann.

Die Vektorisierungs-Komponente kann derart ausgestaltet und eingerichtet sein, dass verschiedene Konfigurationsdatensätze jeweils in ein einheitliches, zur Verarbeitung durch die AI-Komponente geeignetes Format transformiert werden. Eine solche Transformation kann beispielsweise eine Normierung von Werten oder Daten umfassen, eine Umrechnung von Werten oder Daten umfassen, eine Umformatierung von Werten und Daten umfassen, einen Abgleich von verschiedenen Werten und Daten umfassen, ein Anordnen von bestimmten Werten und Daten umfassen oder vergleichbare Strukturierungs- und/oder Anpassungs-Maßnahmen umfassen.

Dabei kann die Vektorisierungs-Komponente beispielsweise herkömmliche Datenverarbeitungs-Komponenten umfassen oder auch, zumindest zum Teil, Komponenten eines neuronalen Netzes bzw. ein neuronales Netz umfassen.

Unter dem vektorisierten Konfigurationsdatensatz wird das Ergebnis der Verarbeitung eines Konfigurationsdatensatzes durch die Vektorisierungs-Komponente verstanden. Dabei kann der vektorisierte Konfigurationsdatensatz beispielsweise als eine serielle bzw. eindimensionale Anordnung oder Folge von entsprechenden Werten und/oder Daten sein. Weiterhin kann ein vektorisierter Konfigurationsdatensatz auch eine zweidimensionale und/oder höherdimensionale Anordnung von Daten und/oder Werten sein oder eine solche umfassen. So können beispielsweise Konfigurationsdaten bzw. Teile der Konfigurationsdatensätze, welche eine Bild-Information oder topologische Information enthalten oder beschreiben, beispielsweise als ein zwei- oder höherdimensionaler Teil eines vektorisierten Konfigurationsdatensatzes ausgebildet sein. Weiterhin können beispielsweise Parameterwerte für Hardwarekomponenten, Programmcode von Steuerprogrammen oder vergleichbare Daten als eindimensionale bzw. serielle Anordnung im vektorisierten Konfigurationsdatensatzes enthalten sein. Dabei kann die Anordnung der Daten innerhalb des vektorisierten Konfigurationsdatensatzes beispielsweise einer einheitlichen Dimensionalität entsprechend. Weiterhin kann ein vektorisierter Konfigurationsdatensatz auch verschieden-dimensionale Untersegmente aufweisen.

Die Umwandlung von Konfigurationsdatensätzen in vektorisierte Konfigurationsdaten-Sätze durch die Vektorisierungs-Komponente wird in der vorliegenden Beschreibung als Vektorisierung der Konfigurationsdatensätze bezeichnet.

Es ist ein Zweck der Vektorisierung der Konfigurationsdatensätze, diese in ein einheitliches Format zu bringen, welches zur Verarbeitung der vektorisierten Daten in einem neuronalen Netzwerk geeignet und dafür ausgebildet ist.

Dabei kann die Vektorisierung eines Konfigurationsdatensatzes folgende Maßnahmen umfassen:
- Die Normierung von Daten und/oder Werten;
- Erstellen einer numerischen Repräsentation von Daten; dies kann beispielsweise die Umwandlung von Text in numerische Daten, beispielsweise durch so genanntes "Textparsing" oder z. B. auch die Verwendung von so genannten "Hash-Funktionen" geschehen;
- die Verkettung von geordneten Datensequenzen und/oder von zusammengehörigen Daten verschiedener Quellen;
- die Bildung von Werten, welche Daten beschreiben oder zusammenfassen (z. B. Bildung von Mittelwerten, Bestimmung einer Anzahl von Datenpunkten, Rausch-Reduktions-Methoden usw.);
- Umwandlung von Zeitreihen in die Frequenzdomäne und/oder umgekehrt.

Die Vektorisierungs-Komponente ist derart ausgestaltet und eingerichtet, dass sie zumindest zur Strukturierung und Anpassung der Konfigurationsdatensätze der Konfigurationsdatenbank ausgebildet und eingerichtet ist. Da Konfigurationsdatensätze zu unterschiedlichen Automatisierungssystemen üblicherweise jeweils zumindest teilweise unterschiedliche Hardware-Komponenten, Sensoren und Aktoren, enthalten und für die Steuerung vorsehen können, kann die Vektorisierungs-Komponente weiterhin derart ausgebildet und eingerichtet sein, dass sie sämtliche Konfigurationsdatensätze der Konfigurationsdatenbank verarbeiten kann.

Dabei können die vektorisierten Konfigurationsdatensätze derart ausgebildet und eingerichtet sein, dass sie eine einheitliche Datenstruktur aufweisen. Insbesondere kann die Vektorisierungs-Komponente derart ausgebildet und eingerichtet sein, dass sie verschiedene Konfigurationsdatensätze zu verschiedenen Automatisierungssystemen jeweils in vektorisierte Konfigurationsdatensätze mit einheitlicher Datenstruktur umwandelt. Auf diese Weise können die vektorisierten Konfigurationsdatensätze zuverlässig von der AI-Komponente verarbeitet werden, da sie durch die Transformation in das einheitliche Datenformat untereinander vergleichbarer und/oder auf einheitlichere Weise verarbeitbar oder analysierbar werden.

Unter der AI-Komponente wird eine Einrichtung verstanden, welche zum Verarbeiten oder Bearbeiten von Daten mithilfe der Methoden der künstlichen Intelligenz und/oder des maschinellen Lernens ausgebildet und eingerichtet ist. Insbesondere ist die AI-Komponente zum Verarbeiten der vektorisierten Konfigurationsdaten mithilfe von Methoden der künstlichen Intelligenz und/oder des maschinellen Lernens ausgebildet und eingerichtet. Zu diesem Zweck umfasst die AI-Komponente ein neuronales Netz, welches eine Deep-Learning-Architektur umfasst.

Unter einem neuronalen Netz wird, zumindest im Zusammenhang mit der vorliegenden Beschreibung, eine elektronische Einrichtung verstanden, welche ein Netzwerk sogenannter Knoten umfasst, wobei in der Regel jeder Knoten mit mehreren anderen Knoten verbunden ist. Die Knoten werden beispielsweise auch als Neuronen, Units oder Einheiten bezeichnet. Dabei hat jeder Knoten mindestens eine Eingangs- und eine Ausgangsverbindung. Als Eingangs-Knoten für ein neuronales Netz, werden solche Knoten verstanden, welche von der Außenwelt Signale (Daten, Reize, Muster oder ähnliches) empfangen können. Unter Ausgabe-Knoten eines neuronalen Netzes werden solche Knoten verstanden, welche Signale, Daten oder ähnliches an die Au-ßenwelt weitergeben können. Unter sogenannten "versteckten Knoten" ("hidden node") werden solche Knoten eines neuronalen Netzes verstanden, welche weder als Eingangs- noch als Ausgangs-Knoten ausgebildet sind.

Ein neuronales Netz kann in der Regel trainiert werden, indem über verschiedenste bekannte Lernmethoden durch Eingabe von Eingangsdaten in das neuronale Netz und Analyse der dann entsprechenden Ausgangsdaten aus dem neuronalen Netz Parameterwerte für die einzelnen Knoten oder für deren Verbindungen ermittelt werden. Auf diese Weise kann ein neuronales Netz mit bekannten Daten, Mustern, Reizen oder Signalen auf an sich heute bekannte Weise trainiert werden, um das so trainierte Netz dann nachfolgend beispielsweise zur Analyse weiterer Daten verwenden zu können.

Unter einem neuronalen Netz mit einer Deep-Learning-Architektur wird beispielsweise ein neuronales Netz mit einem "tiefen neuronalen Netz" ("deep neural network") einem "deep belief network" oder einem "recurrent neural network" verstanden.

Dabei kann ein sogenanntes tiefes neuronales Netz ("deep neural network" (DNN)) beispielsweise als ein neuronales Netz ausgebildet sein, in welchem die Netzknoten in Schichten angeordnet sind (wobei die Schichten selbst ein-, zwei- oder auch höher-dimensional sein können). Ein tiefes neuronales Netz umfasst dabei mindestens eine oder zwei sogenannte verdeckte Schichten, welche nur Knoten umfassen, die nicht Eingangsknoten oder Ausgangsknoten sind. Das heißt, die verdeckten Schichten haben keine Verbindungen zu Eingangssignalen oder Ausgangssignalen.

Unter dem sogenannten "Deep Learning" wird dabei beispielsweise eine Klasse von maschinellen Lerntechniken verstanden, welche viele Schichten der nichtlinearen Informationsverarbeitung für die überwachte oder nicht-überwachte Merkmalsextraktion und -transformation sowie zur Musteranalyse und - klassifizierung ausnutzt.

Weiterhin kann unter "Deep Learning" auch ein Teilgebiet des maschinellen Lernens verstanden werden, welches auf Algorithmen zum Erlernen mehrerer Darstellungsebenen basiert, um komplexe Beziehungen zwischen Daten zu modellieren. Dabei können beispielsweise Merkmale und Konzepte auf einer höheren Ebene auf Basis von Begriffen unterer Ebenen definiert sein. Eine solche Hierarchie von Merkmalen kann beispielsweise dann als "Deep-Learning-Architektur" bezeichnet werden. Die AI-Komponente kann dabei eines oder auch mehrere neuronale Netze mit einer Deep-Learning-Architektur gemäß der vorliegenden Beschreibung umfassen.

Unter maschinellem Lernen ("Machine-Learning") wird beispielsweise ein Teilgebiet der Informatik bezeichnet, welches häufig synonym zum Begriff der "künstlichen Intelligenz" genutzt wird, um beispielsweise die automatisierte Verarbeitung von Daten z. B. aus den Bereichen Big Data, intelligenten Assistenz-Systemen oder auch Planungssystemen zu beschreiben.

Das neuronale Netz mit der Deep-Learning-Architektur kann beispielsweise als ein so genanntes "Deep-Neural-Network" (ein so genanntes "tiefes neuronales Netz") (DNN) ausgebildet und eingerichtet sein. Dabei kann die Struktur des Deep-Neural-Network beispielsweise als so genanntes "Recurrent Neural Network" ausgestaltet sein. Dies ist eine Ausprägung eines Deep-Neural-Networks, welche besonders dazu geeignet ist, sequentielle Eingabedaten wie beispielsweise Sprache und/oder Zeitreihen zu verarbeiten und zu klassifizieren.

Weiterhin kann das DNN auch die Struktur eines so genannten neuronalen Faltungsnetzwerks ("Convolution Neural Network") ausgestaltet und eingerichtet sein. Solche Netzwerke sind beispielsweise besonders dazu geeignet, um zweidimensionale und/oder dreidimensionale Eingabedaten, wie Bilder oder 3D-Modelle zu verarbeiten und zu klassifizieren.

Das Deep-Neural-Network kann beispielsweise auch eine so genannte Auto-Encoder-Struktur aufweisen, welche im Verlauf der vorliegenden Beschreibung noch näher erläutert wird. Eine derartige Auto-Encoder-Struktur kann beispielsweise geeignet sein, um eine Dimensionalität der Daten zu reduzieren und beispielsweise so Ähnlichkeiten und Gemeinsamkeiten zu erkennen.

Ein Deep-Neural-Network kann beispielsweise auch als ein so genanntes Klassifizierungs-Netz ausgebildet sein, welches besonders dazu geeignet ist, Daten in Kategorien einzuteilen. Derartige Klassifizierungs-Netze werden beispielsweise in Zusammenhang mit Handschrift-Erkennung eingesetzt.

Eine weitere mögliche Struktur eines neuronalen Netzes mit Deep-Learning-Architektur kann beispielsweise die Ausgestaltung als so genanntes "Deep-Believe-Network" sein.

Ein neuronales Netz mit einer Deep-Learning-Architektur kann beispielsweise auch eine Kombination von mehreren der vorstehend genannten Strukturen aufweisen. So kann beispielsweise die Deep-Learning-Architektur eine Auto-Encoder-Struktur umfassen, um die Dimensionalität der Eingangsdaten zu reduzieren, welche dann weiterhin mit einer anderen Netzstruktur kombiniert werden kann, um beispielsweise Besonderheiten und/oder Anomalien innerhalb der datenreduzierter Dimensionalität zu erkennen bzw. die datenreduzierter Dimensionalität zu klassifizieren.

Mit den Merkmalen des geltenden Patentanspruchs 15 wird das Assistenzsystem trainiert, wobei das neuronale Netz als ein trainiertes neuronales Netz ausgebildet und eingerichtet ist. Dabei ist vorgesehen, dass ein Training des neuronalen Netzes mit der Konfigurationsdatenbank entnommenen und vektorisierten Konfigurationsdatensätzen, durchgeführt wurde. Insbesondere kann das Training auch mit allen in der Konfigurationsdatenbank gespeicherten Konfigurationsdatensätzen durchgeführt worden sein.

Zum Training des neuronalen Netzes mit der Deep-Learning-Architektur kann beispielsweise eine der Methoden des so genannten "überwachten Lernens" ("supervised learning") verwendet werden. Hierbei werden einem Netz durch Training mit entsprechenden Trainingsdaten diesen Daten jeweils zugeordnete Ergebnisse oder Fähigkeiten antrainiert. Weiterhin kann zum Training des neuronalen Netzes auch eine Methode des so genannten unüberwachten Trainings ("unsupervised learning") verwendet werden. Ein solcher Algorithmus erzeugt für eine gegebene Menge von Eingaben beispielsweise ein Modell, welches die Eingaben beschreibt und daraus Vorhersagen ermöglicht. Dabei gibt es beispielsweise Clustering-Verfahren, mit welchen sich die Daten in verschiedene Kategorien einteilen lassen, wenn sie sich beispielsweise durch charakteristische Muster voneinander unterscheiden.

Beim Trainieren eines neuronalen Netzes können auch überwachte und unüberwachte Lernmethoden kombiniert werden, beispielsweise wenn Teilen der Daten antrainierbare Eigenschaften oder Fähigkeiten zugeordnet sind, während dies bei einem anderen Teil der Daten nicht der Fall ist.

Weiterhin können auch noch Methoden des so genannten bestärkenden Lernens ("reinforcement learning") für das Training des neuronalen Netzes, zumindest unter anderem, verwendet werden.

Vorzugsweise kann beim Training des neuronalen Netzes mit Konfigurationsdatensätzen gemäß der vorliegenden Beschreibung eine Methode des unüberwachten Lernens (unsupervised learning) eingesetzt werden, da derartigen Konfigurationsdaten, bzw. Teilen davon, häufig keine Ziel- oder Wunschwerte zugeordnet sind, mit welchen das Netz trainiert werden könnte. Allerdings können durchaus einzelne der Werte in einem Konfigurationsdatensatz als Ziel- bzw. Wunschwerte betrachtet werden wie beispielsweise eine Qualitätsbewertung für einen Konfigurationsdatensatz oder Ähnliches. Daher können auch Kombinationen aus unüberwachtem, überwachtem und/oder "reinforcement-" Lernen zum Training des neuronalen Netzes Anwendung finden.

Allgemein wird unter dem Training des neuronalen Netzes verstanden, dass die Daten, mit welchen das neuronale Netz trainiert wird, im neuronalen Netz mithilfe eines oder mehrerer Trainings-Algorithmen verarbeitet werden, um so genannte Vorspannungswerte ("Bias"), Gewichtungswerte ("weights") und/oder Transferfunktionen ("Transfer Functions") der einzelnen Knoten des neuronalen Netzes bzw. der Verbindungen zwischen jeweils zwei Knoten innerhalb des neuronalen Netzes zu berechnen bzw. zu verändern.

Als Trainingsalgorithmen können beispielsweise Methoden der "Constrastive Divergence", so genannte "Backpropagation-Methoden" ("Backwards Propagation of Errors") und/oder so genannte "Conjugate Gradient"-Methoden verwendet werden. Die die einzelnen Knoten und deren Verbindungen beschreibenden Werte inklusive weiterer das neuronale Netz beschreibender Werte können beispielsweise in einem das neuronale Netz beschreibenden Wertesatz gespeichert werden. Ein solcher Wertesatz stellt dann beispielsweise eine Ausgestaltungen des neuronalen Netzes dar. Wird ein solcher Wertesatz nach einem Training des neuronalen Netzes gespeichert, so wird damit beispielsweise eine Ausgestaltung eines trainierten neuronalen Netzes gespeichert. So ist es beispielsweise möglich, in einem ersten Computersystem das neuronale Netz mit entsprechenden Trainingsdaten zu trainieren, den entsprechenden Wertesatz, welcher diesem neuronalen Netz zugeordnet ist, dann zu speichern und als Ausgestaltung des trainierten neuronalen Netzes in ein zweites System zu transferieren. Dort können dann mithilfe dieses trainierten neuronalen Netzes weitere Daten, beispielsweise Konfigurationsdatensätze oder vektorisierte Konfigurationsdatensätze gemäß der vorliegenden Beschreibung, verarbeitet werden.

Beispielsweise kann ein Training, welches eine relativ hohe Rechenleistung eines entsprechenden Computers erfordert, auf einem hochperformanten System geschehen, während weitere Arbeiten oder Datenanalysen mit dem trainierten neuronalen Netzes dann durchaus auf einem niedriger-performanten System durchgeführt werden kann. Solche weiteren Arbeiten und/oder Datenanalysen mit dem trainieren neuronalen Netz können zum Beispiel auf einem Assistenzsystem und/oder auf einer Steuereinrichtung, einer Speicherprogrammierbaren Steuerung oder einer modularen Speicherprogrammierbaren Steuerung gemäß der vorliegenden Beschreibung erfolgen.

Mit den Merkmalen des geltenden Patentanspruchs 17 wird die Planung eines Automatisierungssystems unter Verwendung des Assistenzsystems unterstützt. Dabei ist vorgesehen, dass einem Nutzer des Assistenz-systems zu Daten des Entwurfs-Konfigurationsdatensatzes jeweils zugehörige Daten des Empfehlungs- Konfigurationsdatensatzes ausgegeben werden.

Dies kann beispielsweise derart ausgestaltet sein, dass der Nutzer in einer Planungseinrichtung für ein Automatisierungs-System, beispielsweise in einem sogenannten "Engineering-System" oder einem sogenannten "Programmiergerät", einen Entwurfs-Konfigurationsdatensatz für ein vorliegendes Automatisierungs-System erstellt. Dabei kann der Entwurfs-Konfigurationsdatensatz auch nur Teile der für die Konfiguration des Automatisierungs-Systems notwendigen Daten umfassen. Mittels der Vektorisierungs-Komponente des Assistenzsystems wird der Entwurfs-Konfigurationsdatensatz dann in einen vektorisierten Entwurfs-Konfigurationsdatensatz umgewandelt und unter Verwendung des neuronalen Netzes des Assistenzsystems dann damit ein Empfehlungs-Konfigurationsdatensatz aus der Konfigurationsdatenbank ermittelt.

Es können dann beispielsweise jeweils zu bestimmten eingegebenen Daten des Entwurfs-Konfigurationsdatensatzes die entsprechenden Daten des Empfehlungs-Konfigurationsdatensatzes auf einer Bedien- bzw. Benutzeroberfläche angezeigt werden, die z.B. auf einer Anzeigeeinrichtung der Planungseinrichtung dargestellt sein können.

Dabei können "zu bestimmten eingegebenen Daten des Entwurfs-Konfigurationsdatensatzes die entsprechenden Daten des Empfehlungs- Konfigurationsdatensatzes" bzw. "zu Daten des Entwurfs-Konfigurationsdatensatzes jeweils zugehörige Daten des Empfehlungs- Konfigurationsdatensatzes" gemäß der vorstehenden Beschreibung beispielsweise jeweils so ermittelt werden, dass diese Daten jeweils einer gleichen Daten-Kategorie und/oder einer gleichen Komponenten-Kategorie bzw. einem gleichen Komponenten-Typus von Komponenten der entsprechend zugehörigen Automatisierungssysteme angehören. Dabei können Daten-Kategorien beispielsweise Kategorien wie Netzwerk-Adressen, Kommunikations-Parameter, Firmware-Informationen, Firmware-Version, Informationen zu Software-Bausteinen, Komponenten-Typus-Informationen und weitere vergleichbare Daten-Kategorien sein, wie sie üblicherweise beim Einrichten von Automatisierungssystemen verwendet werden. Komponenten-Kategorien bzw. Komponenten-Typen können beispielsweise Typen wie CPU-Modul für eine speicherprogrammierbare Steuerung (SPS), Ein-/Ausgabemodul oder auch weitere Module für eine SPS, Kommunikations-Netzkomponenten (z.B. sogenannte "Router" oder "Switche"), Antriebe, Umrichter, verschiedene Sensor-Typen oder vergleichbare Komponenten-Kategorien sein, wie sie üblicherweise beim im Rahmen von Automatisierungssystemen verwendet werden.

Weiterhin kann zur Ermittlung von entsprechenden bzw. zugehörigen Daten aus Entwurfs- und Empfehlungs-Konfigurationsdatensatz auch vorgesehen sein, dass Komponenten des dem Entwurfs-Konfigurationsdatensatz zugrundeliegenden Automatisierungssystems Komponenten des dem Empfehlungs-Konfigurationsdatensatz zugrundeliegenden Automatisierungssystems zugeordnet werden (oder auch andersherum). Nachfolgend können dann die Daten gleichen Daten-Typus der jeweils den einzelnen einander zugeordneten Komponenten als sich entsprechende Daten von Entwurfs- und Empfehlungs-Konfigurationsdatensatz im Sinne der vorliegenden Beschreibung verwendet werden. Innerhalb eines Konfigurationsdatensatz können Datenfelder vorgesehen sein, in welchen die einzelnen Konfigurationsdaten gespeichert sind. Diese Datenfelder können jeweils Bezeichnungen oder Adressen zugewiesen sein, unter welchen die jeweils dort gespeicherten Konfigurationsdaten dann beispielsweise abgerufen werden können. Außerdem kann innerhalb eines Konfigurationsdatensatzes eine Datenstruktur, beispielsweise ein hierarchische Datenstruktur vorgesehen sein. "Zu bestimmten eingegebenen Daten des Entwurfs-Konfigurationsdatensatzes die entsprechenden Daten des Empfehlungs- Konfigurationsdatensatzes" bzw. "zu Daten des Entwurfs-Konfigurationsdatensatzes jeweils zugehörige Daten des Empfehlungs- Konfigurationsdatensatzes" gemäß der vorstehenden Beschreibung können dann beispielsweise jeweils so ermittelt werden, dass diese Daten jeweils eine gleiche oder analoge interne oder externe Bezeichnung des jeweils zugeordneten Datenfelds aufweisen. Weiterhin können solche sich jeweils entsprechenden Daten auch eine gleiche oder vergleichbare Position innerhalb einer Datenstruktur, z.B. einer hierarchischen Datenstruktur, des jeweiligen Konfigurationsdatensatzes aufweisen oder sich auf einer gleichen Hierarchiestufe befinden.

Die vorstehend beschriebenen Möglichkeiten, Daten eines Empfehlungs-Konfigurationsdatensatzes jeweils Daten eines Entwurfs-Konfigurationsdatensatzes zuzuordnen, können jede für sich verwendet oder auch beliebig kombiniert werden.

Dabei können beispielsweise die Daten des Empfehlungs-Konfigurationsdatensatzes jeweils in räumlicher Nähe zu den entsprechenden Daten des Entwurfs-Konfigurationsdatensatzes auf der Benutzeroberfläche der Planungseinrichtung angezeigt werden. Beispielsweise können die Daten des Empfehlungs-Konfigurationsdatensatzes auch jeweils in einem Auswahl-Menü mit den entsprechenden zugehörigen Daten des Entwurfs-Konfigurationsdatensatzes angezeigt werden, so dass beispielsweise ein Nutzer auswählen kann, ob er ein ursprünglich eingegebenes Datum verwenden möchte oder das entsprechende Datum aus dem Empfehlungs-Konfigurationsdatensatz.

Vom Assistenzsystem können auch mehrere Empfehlungs-Konfigurationsdatensätze zu einem Entwurfs-Konfigurationsdatensatz ermittelt werden. Es können dann entsprechend jeweils mehrere Daten aus den jeweiligen Empfehlungs-Konfigurationsdatensätzen in räumlicher Nähe zu einem entsprechenden zugehörigen Datum aus dem Entwurfs-Konfigurationsdatensatz angezeigt werden oder auch, wie oben ebenfalls beschrieben, im Rahmen eines entsprechenden Auswahl-Menüs.

Auf diese Weise bekommt ein Nutzer eine Unterstützung bei der Erstellung der Konfiguration zu einem bestimmten Automatisierungs-System, in dem er beispielsweise zu einem bestimmten Werten aus dem Entwurfs-Konfigurationsdatensatz für dieses Automatisierungs-System vom Assistenzsystem entsprechende Werte angezeigt oder mitgeteilt bekommt, welche bereits in Konfigurationsdatensätzen entsprechender und/oder vergleichbarer Automatisierungs-Systeme verwendet wurden. Dies vereinfacht die Konfiguration entsprechender Automatisierungs-Systeme, da auf diese Weise die Erfahrungen bei der Konfiguration anderer Automatisierungs-Systeme ausgenützt werden können.

Weiterhin kann einem Nutzer des Assistenzsystems zu Daten des Entwurfs- Konfigurationsdatensatzes eine Abweichung von jeweils zugehörigen Daten des Empfehlungs-Konfigurationsdatensatzes ausgegeben werden.

In einer Vorgehensweise, beispielsweise vergleichbar zur vorstehend dargestellten Vorgehensweise kann in diesem Fall einen Benutzer beispielsweise anstatt einem entsprechenden Wert zu einem Datum aus dem aktuellen Entwurfs-Konfigurationsdatensatz nicht der entsprechende Wert des Empfehlungs-Konfigurationsdatensatzes sondern eine Abweichung von diesem angezeigt werden.

Dabei können entsprechend auch vom Assistenz-System wiederum mehrere Empfehlungs-Konfigurationsdatensätze ermittelt werden, wobei dann analog zur vorstehend dargestellten Ausgestaltung auch hier jeweils die verschiedenen Abweichungen eines Datums aus dem Entwurfs-Konfigurationsdatensatz zu den jeweiligen Daten der verschiedenen Empfehlungs-Konfigurationsdatensätze angezeigt werden. Auch hier kann die Anzeige dieser Daten in räumlicher Nähe zum jeweiligen Datum des Entwurfs-Konfigurationsdatensatzes angezeigt werden. Die Anzeige kann dabei auch wieder im Rahmen eines entsprechenden Auswahl-Menüs erfolgen. Eine Abweichung kann dabei beispielsweise bei nummerischen Werten eine Differenz der Werte darstellen. Bei alpha-nummerischen Werten oder Daten kann eine Abweichung beispielsweise Unterschiede in den entsprechenden Zeichenketten entsprechen. Bei Bild-Daten können Abweichungen beispielsweise Unterschiede der Bilder im Entwurfs-Konfigurationsdatensatz und im Empfehlungs-Konfigurationsdatensatz bzw. in den Empfehlungs-Konfigurationsdatensätzen sein.

Mit Hilfe dieser Ausgestaltung kann einem Nutzer das Einrichten der Konfiguration eines Automatisierungs-Systems weiter vereinfacht werden, da ihm Unterschiede bei der von ihm aktuell erstellten Konfiguration zu früheren Konfigurationen vergleichbarer Automatisierungs-Systeme besonders deutlich dargestellt werden. Die Abweichungen der Daten des Entwurfs-Konfigurationsdatensatzes bzw. der Entwurfs-Konfigurationsdatensätze von den entsprechenden Daten des Empfehlungs-Konfigurationsdatensatzes kann beispielsweise auch farblich hervorgehoben werden.

Einem Nutzer des Assistenz-Systems können weiterhin auch zu Daten des Entwurfs-Konfigurationsdatensatzes ergänzende Daten aus dem Empfehlungs-Konfigurationsdatensatz ausgegeben werden.

Dabei können beispielsweise nach der Ermittlung eines Empfehlungs-Konfigurationsdatensatzes durch das Assistenz-System einem Nutzer des Assistenz-Systems oder Planungssystems auch Werte ausgegeben werden, welche keinem der eingegebenen Daten des Entwurfs-Konfigurationsdatensatzes entsprechen. Hilfreich ist diese Ausgestaltung beispielsweise in Fällen, in welchen der Nutzer des Assistenz-Systems einen Entwurfs-Konfigurationsdatensatz zu einem bestimmten Automatisierungs-System erstellt, der nicht alle notwendigen oder möglichen Konfigurationsdaten enthält. In diesem Fall kann das Assistenz-System, beispielsweise unter Verwendung der Daten des ermittelten Empfehlungs-Konfigurationsdatensatzes, den Entwurfs-Konfigurationsdatensatz quasi ergänzen, in dem es dem Nutzer Konfigurationsdaten ausgibt, die zur Konfiguration des aktuellen Automatisierungs-Systems sinnvoll und/oder erforderlich sind und für die im Entwurfs-Konfigurationsdatensatz noch keine Werte hinterlegt waren.

Dies kann beispielsweise derart ausgestaltet sein, dass in der Planungseinrichtung für das aktuelle Automatisierungs-System eine Eingabemaske zur Eingabe verschiedener Konfigurationsdaten vorgesehen waren, welche bei der Erstellung des Entwurfs-Konfigurationsdatensatzes teilweise vom Nutzer aber nicht ausgefüllt wurden. In diesem Fall kann das Assistenz-System dann Daten des Empfehlungs-Konfigurationsdatensatzes in entsprechende noch unbelegte Datenfelder ausgeben. Weiterhin können solche ergänzenden Daten aus dem Empfehlungs-Konfigurationsdatensatz auch in entsprechenden Drop-Down-Menüs, Auswahl-Listen, Tabellen oder Anzeigefenstern einer Bildschirmoberfläche einer Planungseinrichtung im Zusammenhang mit den eingegebenen Daten des Entwurfs-Konfigurationsdatensatzes angezeigt werden.

Auf diese Weise erhält ein Nutzer bei der Planung der Konfiguration eines Automatisierungs-Systems vom Assistenz-System die Unterstützung, dass er vermittels der vorstehend dargestellten Ausgestaltung ergänzende Daten für die von ihm bereits erstellten Entwurfs-Konfigurationsdaten zur Verfügung gestellt bekommt. Auch hier können vom Assistenz-System auch mehrere Empfehlungs-Konfigurationsdatensätze ermittelt werden, wobei dann auch jeweils mehrere Daten zu einem bestimmten nicht eingegebenen Datum des Entwurfs-Konfigurationsdatensatzes ausgegeben werden können.

Die drei vorstehend genannten Ausgestaltungen: Ausgabe jeweils zugehöriger Daten des Empfehlungs-Konfigurationsdatensatzes, Ausgabe einer Abweichung von jeweils zugehörigen Daten des Empfehlungs-Konfigurationsdatensatzes und Ausgabe von die Daten des Entwurfs-Konfigurationsdatensatzes ergänzenden Daten aus dem Empfehlungs-Konfigurationsdatensatz, können auch in beliebiger Kombination miteinander als Ausgestaltung des Assistenz-Systems vorgesehen sein.

Das Assistenz-System kann weiterhin derart ausgestaltet und eingerichtet sein, dass es zur Erstellung eines Ergebnis-Konfigurationsdatensatzes unter Verwendung des Entwurfs- und des Empfehlungs-Konfigurationsdatensatzes ausgebildet und eingerichtet ist. Weiterhin kann es auch zur Bestimmung von dem Ergebnis-Konfigurationsdatensatz zugehörigen Hardware-Komponenten ausgebildet und eingerichtet sein. Zudem kann das Assistenz-System weiterhin auch zur Ermittlung von diesen Hardware-Komponenten zugehörigen Bestellinformationen ausgebildet und eingerichtet sein. Alternativ kann das Assistenz-System auch zur Speicherung eines Ergebnis-Konfigurationsdatensatzes, welcher unter Verwendung des Entwurfs- und des Empfehlungs-Konfigurationsdatensatzes ermittelt wurde, ausgebildet und eingerichtet sein. Dabei können dann wiederum aus dem Ergebnis-Konfigurationsdatensatz die zugehörigen Hardware-Komponenten vom Assistenz-System ermittelt werden bzw. ermittelbar sein.

Im Rahmen dieser Ausgestaltung wird es dem Fachmann z.B. möglich, unter Verwendung des Assistenz-Systems mit dem Entwurfs-Konfigurationsdatensatze sowie dem einen oder mehreren Empfehlungs-Konfigurationsdatensatz einen Ergebnis-Konfigurationsdatensatz zu erstellen. Dieser kann dann beispielsweise der für das aktuell zu projektierende Automatisierungs-System verwendete Konfigurationsdatensatz sein. Alternativ kann das Assistenz-System auch zur Speicherung eines solchen Empfehlungs-Konfigurationsdatensatzes ausgebildet und eingerichtet sein. Dieser Empfehlungs-Konfigurationsdatensatz kann dann beispielsweise auch in einem anderen System, beispielsweise einer Planungseinrichtung für Automatisierungssysteme, erstellt worden sein.

Das Assistenz-System kann dann aus diesem Ergebnis-Konfigurationsdatensatz beispielsweise die diesem Ergebnis-Konfigurationsdatensatz zugrunde liegenden Hardware-Komponenten ermitteln. Diese Hardware-Komponenten können dann beispielsweise einem Nutzer ausgegeben werden. Weiterhin können vom Assistenz-System auch diesen Hardware-Komponenten zugehörige Bestellinformationen, beispielsweise eines bestimmten Herstellers oder auch von mehreren Herstellern, ermittelt werden. Im Falle der Ermittlung von Bestellinformationen mehrerer unterschiedlicher Hersteller können dann diese entsprechend zum Vergleichen ausgegeben werden. Alternativ oder zusätzlich kann das Assistenz-System beispielsweise auch dazu ausgebildet und eingerichtet sein, unter Verwendung der bestimmten Bestellinformationen entsprechende Bestellunterlagen zur Bestellung der entsprechenden Hardware-Komponenten bei einem oder mehreren Herstellern zu erstellen. Dabei kann das Assistenz-System weiterhin auch zum Absenden der Bestell-Unterlagen an die jeweiligen Hersteller ausgebildet und eingerichtet sein, wobei das Absenden beispielsweise auf elektronischem Wege, per Fax oder auch durch Ausdrucken der Bestell-Unterlagen erfolgen kann.

Zur Ermittlung der Bestell-Informationen können beispielsweise entsprechende Datenbanken vorgesehen sein oder auch entsprechende Kommunikations-Komponenten oder -Einrichtungen zur Ermittlung der Bestell-Informationen aus dem Internet oder vergleichbaren Computer-Netzwerken.

Auf diese Weise lässt sich mit dem Assistenz-System nicht nur ein Vergleich einer aktuell erarbeiteten Entwurfs-Konfiguration mit einer oder mehreren Empfehlungs-Konfigurationen vergleichbarer Automatisierungs-Systeme ermitteln, sondern weiterhin auch noch dabei verwendete Hardware-Komponenten sowie deren Bestell-Information. Gegebenenfalls kann dann sogar noch eine Bestellung der Hardware-Komponenten vorbereitet und/oder auch durchgeführt werden.

Die Erstellung des Ergebnis-Konfigurationsdatensatzes kann beispielsweise auch zumindest unter teilweiser Verwendung von manuellen Nutzerangaben erfolgen. Diese kann beispielsweise aus einer Auswahl von bestimmten Konfigurationswerten aus dem Entwurfs- und/oder dem einen oder mehreren Empfehlungs-Konfigurationsdatensatz bestehen oder auch aus der manuellen Eingabe von weiteren Daten. Die Erstellung des Ergebnis-Konfigurationsdatensatzes kann auch durch das Assistenz-System ohne weitere Nutzereingaben erfolgen. Dies kann z.B. derart erfolgen, dass beispielsweise für bestimmte Konfigurationsdaten die von einem Nutzer eingegebenen Entwurfs-Konfigurationsdaten verwendet werden, und für nicht von einem Nutzer manuell eingegebene Konfigurationsdaten die entsprechenden Werte eines Empfehlungs-Konfigurationsdatensatzes verwendet werden.

Weiterhin kann vorgesehen sein, dass Konfigurationsdatensätzen der Konfigurationsdatenbank jeweils mindestens eine Bewertungs-Kenngröße zugeordnet ist, und einem Nutzer des Assistenzsystems eine dem Empfehlungs-Konfigurationsdatensatz zugeordnete Empfehlungs-Bewertung ausgegeben wird.

Dabei kann die Empfehlungs-Bewertung beispielsweise aus der Bewertungs-Kenngröße abgeleitet sein oder vom Assistenzsystem aus der Bewertungs-Kenngröße abgeleitet werden. Beispielsweise kann die Empfehlungs-Bewertung aber auch unmittelbar der Bewertungs-Kenngröße entsprechen.

Die Bewertungs-Kenngröße kann beispielsweise eine für eine Qualität eines Konfigurationsdatensatzes der Konfigurationsdatenbank charakteristische Größe, ein charakteristischer Wert und/oder eine charakteristische Beschreibung sein. Die Kenngröße kann beispielsweise ein numerischer Wert oder auch eine alphanumerische Zeichenkette bzw. Beschreibung oder Qualitäts-Beschreibung sein. Beispielsweise kann eine Bewertungs-Kenngröße eine Laufzeit eines einem Konfigurationsdatensatz zugeordneten Projekts oder Automatisierungssystems sein, in welcher die Konfiguration unverändert verwendet wurde. Die Bewertungs-Kenngröße kann beispielsweise auch eine von einem Nutzer eingegebene Bewertung, beispielsweise eine Zufriedenheits-Bewertung oder Qualitäts-Bewertung sein.

Dabei kann das Assistenzsystem beispielsweise derart ausgestaltet und eingerichtet sein, dass die eine oder mehreren Bewertungs-Kenngrößen auch Teil des Konfigurationsdatensatzes sind und entsprechend beim Vektorisieren des Konfigurationsdatensatzes mit vektorisiert werden - und so vom neuronalen Netz des Assistenzsystems quasi "mitgelernt" werden. Alternativ kann auch die eine oder mehreren Bewertungs-Kenngrößen separat gespeichert sein und vermittels einer bestimmten Kennung oder ID beispielsweise einem bestimmten Konfigurationsdatensatz zugeordnet sein, so dass beispielsweise bei der Identifikation eines Konfigurationsdatensatzes der Konfigurationsdatenbank als Empfehlungs-Konfigurationsdatensatz dann die entsprechende Bewertungs-Kenngröße bzw. die Bewertungs-Kenngrößen über die entsprechende Kennung oder ID ermittelbar sind bzw. ermittelt werden.

In einer vorteilhaften Ausgestaltung kann das neuronale Netz eine sogenannte "Auto-Encoder"-Struktur aufweisen. Dabei kann die Autoencoder-Struktur beispielsweise einen Enkodier-Bereich, einen daran gekoppelten Code-Bereich sowie einen mit diesem Code-Bereich verbundenen Dekodier-Bereich aufweisen.

Als ein "Auto-Encoder" kann beispielsweise ein solches neuronales Netzwerk bezeichnet werden, welches darauf trainiert oder trainierbar ist, die in das neuronale Netz eingegebenen Daten am Ausgang des neuronalen Netzes wiederum zu reproduzieren, oder zumindest näherungsweise zu reproduzieren. Dabei kann es beispielsweise ein Einsatzgebiet oder Zweck eines Auto-Encoders sein, die Zahl der für einen gewissen Datensatz charakteristischen Daten zu reduzieren und so eine charakteristischere Beschreibung oder bessere Charakterisierung dieser Daten zu erreichen. Eine solche Dimensionsreduktion kann beispielsweise so erreicht werden, indem die Zahl der Knoten innerhalb des oben bereits beschriebenen Code-Bereichs kleiner ist als diejenige der Encodier- und bzw. Dekodier-Bereiche des Auto-Encoders. Dabei können die Trainingsverfahren für einen Auto-Encoder dann beispielsweise so ausgestaltet und eingerichtet sein, dass die Parameter der einzelnen Knoten und Knotenverbindungen des Auto-Encoders (z.B. Vorspannung ("Bias"), Gewichtung ("Weight") und/oder Transferfunktionen ("Transfer Functions")) so eingerichtet werden, dass die Eingangs-Daten am Ausgang des Auto-Encoders wieder reproduziert werden, beziehungsweise zumindest näherungsweise reproduziert werden. Dies ist ein Beispiel für ein sogenanntes unüberwachtes Lernen.

Der Encodier-, Code- und/oder Dekodier-Bereich kann ein oder mehrere Schichten ("layers") von Knoten umfassen. Dabei kann eine Knotenschicht beispielsweise eindimensional, zweidimensional oder höher-dimensional ausgebildet sein. Typischerweise können Knoten einer bestimmten Kotenschicht untereinander nicht verbunden sein, aber jeweils mit einem, mehreren oder auch allen Knoten einer vorhergehenden und/oder nachfolgenden Knotenschicht.

Die vorstehend genannte Dimensionsreduktion kann bei einem aus Knotenschichten aufgebauten Auto-Encoder beispielsweise dann so erreicht werden, dass die Zahl der Knoten innerhalb einer Code-Knotenschicht kleiner ist als diejenigen der einzelnen Encodier- und bzw. Dekodier-Knotenschichten des Auto-Encoders.

Vorteilhafterweise ist die erste der vorhandenen Encodier-Knotenschichten mit den Eingängen des neuronalen Netzes verbunden und die letzte der Decodier-Schichten mit den Ausgängen des neuronalen Netzes. Weiterhin vorteilhafterweise kann der Auto-Encoder derart ausgestaltet und eingerichtet sein, dass die erste der Encodier-Schichten dieselbe Struktur wie die letzte der Decodier-Schichten aufweist. Weiterhin vorteilhafterweise entspricht die Zahl der Encodier-Schichten der Zahl der Decodier-Schichten. Weiterhin kann der Auto-Encoder auch symmetrisch aufgebaut sein, wobei der Auto-Encoder in diesem Fall beispielsweise symmetrisch zur Code-Knotenschicht und/oder dem Code-Bereich ausgebildet sein kann. Symmetrie kann sich dabei vorzugsweise nur auf die Anordnung der einzelnen Knoten und deren Verbindungen beziehen und nicht auf deren jeweilige Parameter (z.B. Bias, Weights, Transfer-Functions).

Beispielsweise kann der Auto-Encoder auch als sogenannter "tiefer Auto-Encoder" ausgebildet sein, bei welchem der Encodier-Bereich und/oder der Decodier-Bereich mehrere Knotenschichten aufweist. Dabei werden diejenigen Knotenschichten des Encodier-Bereichs, welche nicht mit dem Eingang des neuronalen Netzes verbunden sind und diejenigen Schichten des Decodier-Bereichs, welche nicht mit dem Ausgang des neuronalen Netzes verbunden sind, als sogenannte "verdeckte Schichten" ("hidden layers") bezeichnet.

In einer weiteren vorteilhaften Ausgestaltung kann die Zahl der Knoten der Code-Schicht der Auto-Encoder-Struktur kleiner als die Zahl der Knoten der Schichten des Encodier-Bereichs und des Decodier-Bereichs sein.

Vorteilhafterweise ist das neuronale Netz mit der Auto-Encoder-Struktur als trainiertes neuronales Netz ausgebildet und eingerichtet, wobei das neuronale Netz in diesem Fall beispielsweise mit mehreren oder allen Konfigurationsdatensätzen der Konfigurationsdatenbank trainiert worden sein kann.

Weiterhin kann die Auto-Encoder-Struktur derart ausgebildet und eingerichtet sein, dass einem Konfigurationsdatensatz der Konfigurationsdatenbank eine Lokalisierung im Code-Bereich des neuronalen Netzes zugeordnet ist oder zuordenbar ist. Unter der Lokalisierung im Code-Bereich kann beispielsweise verstanden werden, dass die Lokalisierung beispielsweise durch die Lage und z.B. auch die Parameterwerte derjenigen Netzknoten beschrieben wird, welche aktiviert werden, wenn der entsprechende Konfigurationsdatensatz am Eingang des neuronalen Netzes in das neuronale Netz eingegeben wird.

Die Zuordnung einer Lokalisierung kann dabei derart erfolgen, dass nach Eingabe eines vektorisierten Konfigurationsdatensatzes in die Auto-Encoder-Struktur ein oder mehrere Knoten in einer Code-Schicht und/oder dem Code-Bereich der Auto-Encoder-Struktur aktiviert werden. Wird dabei beispielsweise nur ein Knoten aktiviert, so kann dieser Knoten eine dem Konfigurationsdatensatz zugeordnete Lokalisierung darstellen. Werden beispielsweise mehrere Netzknoten aktiviert, so kann eine Lokalisierung beispielsweise als ein Schwerpunkt, ein geometrischer oder räumlicher Mittelpunkt, ein mit Aktivierungs-Kennwerten gewichteter geometrischer oder räumlicher Mittelpunkt oder ein ähnlicher charakteristischer räumlicher Bereich ausgebildet sein.

So kann beispielsweise einem neuronalen Netz mit einer Auto-Encoder-Struktur gemäß der vorliegenden Beschreibung Konfigurationsdatensätzen der Konfigurationsdatenbank, vorteilhafterweise jedem Konfigurationsdatensatz der Konfigurationsdatenbank, eine Lokalisierung im Code-Bereich der Auto-Encoder-Struktur des neuronalen Netzes zugeordnet werden. Dazu wird jeder der Konfigurationsdatensätze am Eingang des neuronalen Netzes eingegeben und dazu dann die im Code-Bereich ermittelte Lokalisierung erfasst und gespeichert. Auf diese Weise ergibt sich für jeden der genannten Konfigurationsdatensätze eine Lokalisierung im Code-Bereich der Auto-Encoder-Struktur des neuronalen Netzes. Dabei ist das neuronale Netz dabei vorteilhafterweise als ein trainiertes neuronales Netz mit einem trainierten Auto-Encoder ausgebildet und eingerichtet.

Diese ermittelten Lokalisierungen können dann weiterhin beispielsweise analysiert werden, wobei beispielsweise Nachbarschaftsbeziehungen der Lokalisierungen als Ähnlichkeiten im Rahmen der zugrundeliegenden Konfigurationsdaten interpretierbar sein können.

Weiterhin können beispielsweise die Lokalisierungen im Code-bereich mittels Cluster-Verfahren untersucht werden (z.B. unter Verwendung des sogenannten "K-means-Clustering"-Verfahrens). Auf diese Weise können beispielsweise Konfigurationsdatensätze in verschiedene, charakteristische Gruppen eingeteilt werden. Dabei entsprechen einer Gruppe von Konfigurationsdatensätzen beispielsweise jeweils diejenigen, deren Lokalisierung im Code-Bereich des Auto-Encoders des neuronalen Netzes innerhalb eines Clusters liegen.

Allgemein werden dabei Konfigurationsdatensätze, vor der Eingabe in das neuronale Netz in vektorisierte Konfigurationsdatensätze gemäß der vorliegenden Beschreibung umgewandelt, auch wenn dies im Rahmen der vorliegenden Beschreibung nicht immer explizit so erwähnt wird.

So kann beispielsweise für den Entwurfs-Konfigurationsdatensatz eine Entwurfs-Lokalisierung im Code-Bereich der Auto-Encoder-Struktur des neuronalen Netzes ermittelt werden, wobei weiterhin unter Verwendung von entsprechenden Lokalisierungen der Konfigurationsdatensätze aus der Konfigurationsdatenbank der Empfehlungs-Konfigurationsdatensatz aus der Konfigurationsdatenbank ermittelt werden kann.

Dabei kann die Ermittlung des Empfehlungs-Konfigurationsdatensatzes beispielsweise derart erfolgen, dass mehreren oder allen Konfigurationsdatensätzen der Konfigurationsdatenbank bereits Lokalisierungen im Code-Bereich der Auto-Encoder-Struktur des neuronalen Netzes zugeordnet sind. Dann wird der Entwurfs-Konfigurationsdatensatz einen vektorisierten Entwurfs-Konfigurationsdatensatz umgewandelt und in das neuronale Netz eingegeben. Nachfolgend wird die Lokalisierung dieses Konfigurationsdatensatzes im Code-Bereich der Auto-Encoder-Struktur des neuronalen Netzes ermittelt, welche dann die genannte Entwurfs-Lokalisierung darstellt. Dabei kann der Entwurfs-Konfigurationsdatensatz beispielsweise gemäß der vorliegenden Beschreibung ausgebildet und eingerichtet sein. Bei bekannter Entwurfs-Lokalisierung kann nun nachfolgend beispielsweise ein Abstand der Entwurfs-Lokalisierung zu verschiedenen, zuvor ermittelten Lokalisierungen von Konfigurationsdatensätzen der Konfigurationsdatenbank ermittelt werden. Dabei kann der Abstand beispielsweise ermittelt werden, in dem die Zahl der Knoten, welche zwischen der Entwurfs-Lokalisierung und der jeweiligen Lokalisierung eines Konfigurationsdatensatzes ermittelt wird bzw. eine minimale Zahl von Knoten ermittelt wird, welche zwischen der Entwurfs-Lokalisierung und der jeweiligen Lokalisierung eines entsprechenden Konfigurationsdatensatzes liegt. Weiterhin kann der Abstand auch als ein geometrischer Abstand in einer ein-, zwei- oder auch drei-dimensionalen Darstellung des Code-Bereichs der Auto-Encoder-Struktur des neuronalen Netzes ausgebildet sein.

Nachfolgend kann dann beispielsweise eine der Entwurfs-Lokalisierung nächste Lokalisierung eines bestimmten Konfigurationsdatensatzes aus der Konfigurationsdatenbank es ermittelt werden. Der zugehörige Konfigurationsdatensatz kann dann beispielsweise als Empfehlungs-Konfigurationsdatensatz ausgewählt werden und beispielsweise an einen Nutzer ausgegeben oder ein entsprechendes Planungssystem oder Engineering-System gemäß der vorliegenden Beschreibung übertragen werden. Weiterhin können auch mehrere der Entwurfs-Lokalisierungen nächstliegende Lokalisierungen von Konfigurationsdatensätzen ermittelt werden, beispielsweise eine vorgegebene Anzahl von nächstliegenden Lokalisierungen oder auch sämtliche Lokalisierungen, welche unterhalb einer vorgegebenen oder vorgebbaren Abstands-Schwelle liegen. Die diesen Lokalisierungen jeweils zugeordneten Konfigurationsdatensätze können dann wiederum als Empfehlungs-Konfigurationsdatensätze erfasst und ggf. an einen Nutzer oder eine Planungseinrichtung bzw. ein Engineering-System gemäß der vorliegenden Beschreibung ausgegeben und/oder übertragen werden.

Weiterhin kann vorgesehen sein, dass Lokalisierungen, die Konfigurationsdatensätzen der Konfigurationsdatenbank im Code-Bereich des neuronalen Netzes zugeordnet sind, weiterhin mindestens einem Cluster-Bereich zugeordnet sind. Das Assistenzsystem kann zudem derart ausgebildet und eingerichtet sein, dass es zur Ermittlung eines Cluster-Standard-Konfigurationsdatensatzes aus einem Cluster-Bereich zugeordneten Konfigurationsdatensätzen ausgebildet und eingerichtet ist.

Dabei kann beispielsweise vorgesehen sein, dass einzelne oder auch alle Konfigurationsdatensätze der Konfigurationsdatenbank jeweils mindestens einem Cluster-Bereich zugeordnet sind. Cluster-Bereiche können beispielsweise derart ermittelt werden, dass für die bereits ermittelten Lokalisierungen von Konfigurationsdatensätzen im Code-Bereich der Auto-Encoder-Struktur des neuronalen Netzes mittels eines Cluster-Algorithmus (z.B. des sogenannten "K-means-clustering"-Algorithmus) entsprechende Häufungen von Lokalisierungen zu Konfigurationsdatensätzen im Code-Bereich des Auto-Encoders gefunden werden und diesen dann beispielsweise von diesem Cluster-Algorithmus entsprechende Cluster-Bereiche zugeordnet werden.

Diesen Cluster-Bereichen können beispielsweise von einem Nutzer oder auch einem entsprechenden Algorithmus technische Gebiete, Anwendungsfelder, Applikationen, Anlagen-Kategorien und/oder vergleichbare Kategorisierungen von Produktions- und/oder Automatisierungs-Systemen zugeordnet werden. So können beispielsweise einem Konfigurationsdatensatz eine oder mehrere solcher Kategorien zugeordnet sein oder in diesem enthalten sein. Dabei kann beispielsweise einem Cluster-Bereich eine Kategorie zugeordnet werden, welche einer Mehrheit der entsprechenden Kategorien der Konfigurationsdatensätze dieses Clusters entspricht.

Die Ermittlung eines Cluster-Standard-Konfigurationsdatensatzes kann beispielsweise derart erfolgen, dass dieser aus der Menge der Konfigurationsdatensätze ermittelt werden, welche eine Lokalisierung im zugehörigen Bereich dieses Clusters aufweisen. So können beispielsweise verschiedenen Konfigurationsdatensätzen Bewertungen gemäß der vorliegenden Beschreibung zugeordnet sein und als Cluster-Standard-Konfigurationsdatensatz derjenige der Konfigurationsdatensätze des Cluster-Bereichs ausgewählt werden, welcher die beste Bewertung aufweist. Weiterhin können auch mehrere, oder auch alle Konfigurationsdatensätze die dem Cluster zugehörig sind, gewählt werden, wobei einzelne der Werte des Cluster-Standard-Konfigurationsdatensatzes als Mittelwerte von Einzeldaten der jeweils gewählten Konfigurationsdatensätze gebildet werden. In einer vorteilhaften Ausgestaltung können diese Methoden auch kombiniert werden, wobei bei einzelnen der Daten das entsprechende Datum aus dem bestbewerteten Konfigurationsdatensatz im Cluster-Standard-Konfigurationsdatensatz verwendet werden kann, während bei anderen Werten ein nach einem beliebigen Verfahren erstellter Mittelwert oder Bestwert herangezogen werden kann.

Dabei können ein oder mehrere Cluster-Bereiche vorgesehen sein. Weiterhin müssen auch nicht alle bekannten Lokalisierungen von Konfigurationsdatensätzen im Code-Bereich der Auto-Encoder-Struktur des neuronalen Netzes einem Cluster-Bereich zugeordnet sein. Die Cluster-Standard-Konfigurationsdatensätze können dann weiterhin als sogenannte "Templates" gespeichert werden und ggf. Nutzern zur Verfügung gestellt werden. In dem Falle, in welchem einem Cluster-Bereich eine oder mehrere Kategorien zugeordnet sind, kann dem Cluster-Standard-Konfigurationsdatensatz dann ebenfalls diese Kategorie zugeordnet werden. Dann könnte einem Nutzer beispielsweise nach Angabe einer bestimmten Kategorie ein entsprechendes Template für einen Konfigurationsdatensatz zur Verfügung gestellt werden.

In einer vorteilhaften Ausgestaltung umfasst mindestens einer der Konfigurationsdatensätze der Konfigurationsdatenbank und/oder der Entwurfs-Konfigurationsdatensatz Hardware-Daten bezüglich Hardware-Einrichtungen des zugehörigen Automatisierungssystems. Weiterhin kann in diesem Fall die Vektorisierungs-Komponente ein Hardware-Daten-Vektorisierungsmodul zur Strukturierung und Anpassung der Hardware-Daten umfassen. Hardware-Einrichtungen können beispielsweise Baugruppen für Steuerungseinrichtungen, Peripheriegeräte, Module für Steuerungen und Kommunikation, Netzwerk-Komponenten, Recheneinrichtungen, Sensoren, Aktoren oder weitere vergleichbare Hardware-Einrichtungen sein, wie sie üblicherweise in Automatisierungssystemen verwendet werden. Entsprechende Hardware-Daten können beispielsweise Kennungen für solche Hardware-Komponenten, Parameter solcher Hardware-Komponenten wie beispielsweise Netzwerkadressen, Steckplatz-Nummern, Leistungsbereiche, Eigenschafts-Kennungen bzw. Eigenschaften, verfügbare Netzwerk-Protokolle, Komponenten- bzw. Zustands-Kennungen, Lokalisierungs-Informationen, Kompatibilitäts-Informationen und vergleichbare Informationen sein, welche üblicherweise in Automatisierungssystemen zum Einrichten und/oder Charakterisieren von darin verwendeten Hardware-Komponenten erforderlich bzw. verwendbar sind oder verwendet werden. Beispielsweise können Hardware-Daten bezüglich Hardware-Einrichtungen eines Automatisierungssystems so genannten Hardware-Konfigurationsdaten innerhalb eines so genannten "Engineering-Systems" für Automatisierungssysteme sein.

Weiterhin kann mindestens einer der Konfigurations-Datensätze der Konfigurationsdatenbank und/oder der Entwurfs-Konfigurations-Datensatz Kommunikations-Daten bezüglich der Kommunikation innerhalb des zugehörigen Automatisierungssystems umfassen. Weiterhin kann die Vektorisierungs-Komponente ein Kommunikations-Daten-Vektorisierungs-Modul zur Strukturierung und Anpassung der Kommunikationsdaten umfassen.

Kommunikationsdaten bezüglich der Kommunikation innerhalb eines Automatisierungssystems können beispielsweise Informationen über ein oder mehrere verwendete Kommunikations-Protokolle, Informationen über ein oder mehrere Kommunikations-Parameter (z.B. Daten- und/oder Paketformate, Übertragungsraten, verwendete Codierungen), eine Information über einen oder mehrere Kommunikations-Protokoll-Typen (beispielsweise ob eine zeitgesteuerte und/oder ereignisgesteuerte Datenübertragung vorliegt) sein oder umfassen. Kommunikationsdaten können weiterhin beispielsweise auch Informationen über Kommunikations-Teilnehmer und/oder deren Eigenschaften, über bestehende und/oder mögliche Kommunikationsverbindungen, über verwendete Kommunikationsbausteine, welche beispielsweise als Software-Bausteine oder auch Hardware-Module ausgestaltet und eingerichtet sein können, sein oder umfassen. Weiterhin können Kommunikationsdaten bezüglich der Kommunikation innerhalb eines Automatisierungssystems beispielsweise auch Informationen über räumliche Anordnungen von Kommunikations-Komponenten sowie Informationen über eine vorliegende Netzwerk-Topologie umfassen. Kommunikations-Daten bezüglich der Kommunikation innerhalb eines Automatisierungssystems können beispielsweise diejenigen Daten umfassen, welche üblicherweise im Rahmen eines Engineerings-Systems für Automatisierungssysteme im Rahmen der Kommunikationsplanung erfasst und gespeichert werden.

Im Falle, dass die Konfigurationsdatensätze der Kommunikationsdatenbank Informationen über eine räumliche Anordnung von Netzwerk-Komponenten und/oder eine Netzwerk-Topologie umfassen, kann das Kommunikations-Daten-Vektorisierungs-Modul der Vektorisierungs-Komponenten beispielsweise derart ausgebildet und eingerichtet sein, dass zumindest Teile der vektorisierten Konfigurations-Datensätze ein zweidimensionales -Vektorformat oder auch ein höher-dimensionales Vektorformat aufweist.

Die Konfigurations-Datensätze der Kommunikationsdatenbank und/oder der Entwurfs-Konfigurationsdatensatz kann weiterhin Software-Daten bezüglich einer Software-Konfiguration des zugehörigen Automatisierungssystems umfassen. Weiterhin kann die Vektorisierungs-Komponente ein Software-Daten-Vektorisierungs-Modul zur Strukturierung und Anpassung der Software-Daten umfassen.

Software-Daten bezüglich einer Software-Konfiguration eines Automatisierungssystems können beispielsweise ein oder mehrere Steuerprogramme, Programmbausteine, Funktionsbausteine oder vergleichbare Softwarekomponenten für das Automatisierungssystem umfassen. Dabei können die Programme beispielsweise in automatisierungs-typischen Programmiersprachen wie beispielsweise KOP, FUP, AWL oder ähnlichen vorliegen oder auch in allgemein üblicheren Programmmiersprachen wie Python, Java, C oder C++. Dabei können entsprechende Programmkomponenten als Source-Code oder auch in compilierter Version (z.B. als sogenannte "Binaries") vorliegen. Die Software-Daten können weiterhin Informationen über beispielsweise im Rahmen der ein oder mehreren Steuerprogramme vorliegende oder umfasste Funktionen umfassen, wie beispielsweise binäre Logik, Werteoperationen, Zeit- und/oder Zählerfunktionen, Vergleichsfunktionen, Umwandlungsfunktionen, Schieben und/oder Rotieren Funktionen, mathematische Funktionen, Programm-Kontroll-Funktionen oder vergleichbare Funktionen. Weiterhin können die Software-Daten auch Zusatzinformationen zu solchen Funktionalitäten umfassen.

Softwaredaten bezüglich einer Software-Konfiguration eines Automatisierungssystems können beispielsweise auch weiterhin Einstellungen zu bestimmten Compilier-Vorgängen für solche Software, zu Simulationsumgebungen, Software-Diagnose und/oder vergleichbare Informationen zu im Automatisierungs-system vorliegender Software sein.

Das Software-Daten-Vektorisierungs-Modul der Vektorisierungs-Komponente kann weiterhin beispielsweise zur Durchführung von Aufbereitungs- und/oder Vektorisierungs-Funktionen beispielsweise bezüglich eines Steuerprogramms ausgebildet und eingerichtet sein. Hierbei kann das Software-Daten-Vektorisierungs-Modul z.B. zur Ausführung von so genannten "NLP"-verfahren (NLP: Natural Language Processing) eingerichtet und ausgestaltet ist. Dabei können beispielsweise NLP-Verfahren implementiert sein, wie sie beispielsweise auch zur Vektorisierung von Text bei der Sprachbearbeitung oder der Text- bzw. Textinhalts-Erkennung durch neuronale Netze verwendet werden.

Weiterhin kann mindestens einer der Konfigurationsdatensätze der Konfigurationsdatenbank und/oder der Entwurfs-Konfigurationsdatensatz HMI-Daten bezüglich einer Konfiguration von Anzeigeeinrichtungen des zugehörigen Automatisierungs-Systems umfassen. Weiterhin kann die Vektorisierungs-Komponente ein HMI-Daten-Vektorisierungs-Modul zur Strukturierung und Anpassung der HMI-Daten umfassen.

Dabei werden unter HMI-Daten (HMI: Human Machine Interface) solche Daten verstanden, die die Ein- und/oder Ausgabe Daten für einen oder mehrere Nutzer eines Systems betreffen. Dabei kann eine Datenausgabe beispielsweise über optische (z.B. ein Bildschirm, Display, Monitor, Touch-Display, LED) und/oder akustische Ausgabeeinrichtungen (z.B. ein Lautsprecher) erfolgen. Eine Eingabe von Daten kann beispielweise über eine Tastatur, Maus, Touch-Oberfläche, Joystick, Kamera oder vergleichbare Einrichtungen erfolgen.

Dabei können HMI-Daten beispielsweise Informationen über beispielsweise ein Display oder über eine Anzeigeeinrichtung auszugebende Daten (z.B. sogenannte "tags"), Informationen über Art und Weise der Darstellung auszugebender Daten (z.B. Informationen zur Darstellung sogenannter "Face Plates"), Informationen zur Anordnung von Informationen auf einer Anzeigeeinrichtung oder einem Display oder auch vergleichbare Informationen umfassen. Weiterhin können HMI-Daten auch Informationen über eine Erfassung, Darstellung und Interpretation von eingegebenen oder einzugebenden Daten umfassen.

Das HMI-Daten-Vektorisierungs-Modul kann beispielsweise derart ausgestaltet und eingerichtet sein, dass im Rahmen der Vektorisierung von HMI-Daten die vektorisierten HMI-Daten zumindest teilweise eine zwei- oder höher dimensionale Datenstruktur aufweisen. So können beispielsweise HMI-Daten, welche Bilddaten und/oder Layout-Daten oder vergleichbaren Daten entsprechend, beispielsweise als zweidimensionale vektorisierte HMI-Daten vom HMI-Daten-Vektorisierungs-Modul erstellt werden.

Die Strukturierung und Anpassung der Daten durch das HMI-Daten- Vektorisierungs-Modul, das Software-Daten-Vektorisierungs-Modul, das Kommunikations-Daten-Vektorisierungs-Modul und/oder das Hardware-Daten-Vektorisierungs-Modul kann beispielsweise weiterhin gemäß der vorliegenden Beschreibung ausgebildet und eingerichtet sein.

Weiterhin kann vorgesehen sein, dass das Hardware-Daten-Vektorisierungs-Modul, das Kommunikations-Daten-Vektorisierungs-Modul, das HMI-Daten-Vektorisierungs-Modul und/oder das Software-Daten-Vektorisierungs-Modul mit mindestens einem anderen der Daten-Vektorisierungs-Module der Vektorisierungs-Komponenten gekoppelt ist.

Dabei kann das vorstehend genannte mindestens eine andere Daten-Vektorisierungs-Modul beispielsweise wiederum das Hardware-Daten-Vektorisierungs-Modul, das Kommunikations-Daten-Vektorisierungs-Modul, das HMI-Daten-Vektorisierungs-Modul und/oder das Software-Daten-Vektorisierungs-Modul der Vektorisierungs-Komponente sein.

Durch die Kopplung von zwei oder mehr der genannten Vektorisierungs-Modulen können beispielsweise Daten, welche innerhalb verschiedener Vektorisierungs-Module vektorisiert werden, untereinander abgeglichen werden um beispielsweise eine einheitliche Darstellung solcher verwandter oder identischer Daten innerhalb eines entsprechenden vektorisierten Konfigurationsdatensatzes zu erhalten. Weiterhin können auf diese Weise auch Redundanzen bzgl. solcher Daten innerhalb eines vektorisierten Konfigurationsdatensatzes reduziert oder vermieden werden.

So können beispielsweise durch Kopplung des Hardware-Daten-Vektorisierungs-Moduls mit dem Kommunikations-Daten-Vektorisierungs-Modul ein und dieselbe Kommunikationsschnittstelle beschreibende Daten abgeglichen und beispielsweise in ihrer Vektorisierung vereinheitlicht werden. Weiterhin können auf diese Weise auch weitere, mit den jeweiligen Schnittstellen-Daten verknüpfte Daten der jeweiligen Konfigurationsdatensätze vermittels der entsprechenden Vektorisierungs-Module abgeglichen und in Beziehung miteinander gesetzt werden. Ein vergleichbarer Abgleich kann beispielsweise zwischen Daten eines Steuerprogramms bezüglich der Ausgabe von Daten, HMI-Daten bezüglich der Ausgabe bestimmter Daten und/oder Hardware-Daten bezüglich bestimmter Ausgabe- und/oder EingabeEinrichtungen (z.B. einer Auflösung eines entsprechenden Displays oder Informationen zu entsprechenden Eingabe-Funktionalitäten) erfolgen.

Die vorstehend genannte Aufgabe wird ebenfalls gelöst von einem Verfahren zum Trainieren eines Assistenz-Systems gemäß der vorliegenden Beschreibung, umfassend die Schritte des geltenden Patentanspruchs 15.

Dabei können der Konfigurationsdatensatz, der vektorisierte Konfigurationsdatensatz, die Vektorisierungs-Komponente, die AI-Komponente, das Deep-Learning-Verfahren sowie das Trainieren des neuronalen Netzes gemäß der vorliegenden Beschreibung ausgebildet und eingerichtet sein.

Weiterhin kann das neuronale Netz eine Auto-Encoder-Struktur gemäß der vorliegenden Beschreibung umfassen oder als Auto-Encoder-Struktur gemäß der vorliegenden Beschreibung ausgebildet sein. Dabei kann dann das Trainieren des neuronalen Netzes derart erfolgen, dass die Parameter der Netzknoten und Knoten-Verbindungen jeweils derart angepasst werden, dass an einem Eingang des Encodier-Bereichs der Auto-Encoder-Struktur eingegebenen Daten des vektorisierten Konfigurationsdatensatzes an einem Ausgang des Decodier-Bereichs der Auto-Encoder-Struktur wieder vorliegen oder zumindest näherungsweise wieder vorliegen.

Dabei können die Auto-Encoder-Struktur sowie das Trainieren des neuronalen Netzes weiterhin gemäß der vorliegenden Beschreibung ausgebildet und eingerichtet sein. Dadurch, dass das Training des neuronalen Netzes derart erfolgt, dass am Eingang des Encodier-Bereichs eingegebenen Daten am Ausgang des Decodier-Bereichs quasi reproduziert werden, lernt das neuronale Netz im Bereich der Auto-Encoder-Struktur quasi die "Identitätsfunktion".

Die vorliegend genannte Aufgabe wird weiterhin gelöst von einem Verfahren zum Unterstützen der Planung eines Automatisierungs-Systems unter Verwendung eines Assistenz-Systems gemäß der vorliegenden Beschreibung, umfassend die Schritte des geltenden Patentanspruchs 17.

Dabei können der Entwurfs-Konfigurationsdatensatz, der vektorisierte Entwurfs-Konfigurationsdatensatz, die Vektorisierungs-Komponente, das neuronale Netz, die AI- Komponente sowie der Empfehlungs-Konfigurationsdatensatz gemäß der vorliegenden Beschreibung ausgebildet und eingerichtet sein.

Die Auswertung der Reaktion des neuronalen Netzes kann beispielsweise eine Analyse der Parameter und/oder Aktivierungs-Parameter von Knoten des neuronalen Netzes nach der Eingabe des vektorisierten Entwurfs-Konfigurationsdatensatzes umfassen oder sein. Beispielsweise kann die Auswertung der Reaktion des neuronalen Netzes die Ermittlung einer Lokalisierung innerhalb des neuronalen Netzes umfassen, welche dem eingegebenen Entwurfs-Konfigurationsdatensatz entspricht. Die Ermittlung einer Lokalisierung und die Lokalisierung selbst kann dabei gemäß der vorliegenden Beschreibung ausgebildet und eingerichtet sein.

Einem Nutzer des Assistenz-Systems können dann weiterhin beispielsweise zu Daten des Entwurfs-Konfigurationsdatensatzes
- jeweils zugehörige Daten des Empfehlungs-Konfigurationsdatensatzes und/oder
- eine Abweichung von jeweils zugehörigen Daten des Empfehlungs-Konfigurationsdatensatzes und/oder
- Daten des Entwurfs-Konfigurationsdatensatzes ergänzende Daten aus dem Empfehlungs-Konfigurationsdatensatz ausgegeben werden.

Dabei können die genannten einem Nutzer ausgegebenen Daten beispielsweise gemäß der vorliegenden Beschreibung ausgebildet und eingerichtet sein. Insbesondere kann die Ausgabe der genannten Daten nachfolgend der Ermittlung des Empfehlungs-Konfigurationsdatensatzes erfolgen.

In einer vorteilhaften Ausgestaltung kann das neuronale Netz beispielsweise eine Auto-Encoder-Struktur gemäß der vorliegenden Beschreibung umfassen, wobei weiterhin das Ermitteln des Empfehlungs-Konfigurationsdatensatzes derart erfolgen kann, dass eine Entwurfs-Lokalisierung des Entwurfs-Konfigurationsdatensatzes im Code-Bereich des neuronalen Netzes ermittelt wird und unter Verwendung von Lokalisierungen der Konfigurationsdatensätze der Konfigurationsdatenbank im Code-Bereich des neuronalen Netzes der Empfehlungs-Konfigurationsdatensatz aus der Konfigurationsdatenbank ermittelt wird.

Dabei kann das Ermitteln des Empfehlungs-Konfigurationsdatensatzes aus der Konfigurationsdatenbank, die Entwurfs-Lokalisierung des Entwurfs-Konfigurationsdatensatzes im Code-Bereich des neuronalen Netzes, die Ermittlung dieser Entwurfs-Lokalisierung und/oder die Verwendung von Lokalisierungen der Konfigurationsdatensätze der Konfigurationsdatenbank zur Ermittlung der Entwurfs-Lokalisierung gemäß der vorliegenden Beschreibung ausgebildet und eingerichtet sein.

Weitere vorteilhafte Ausgestaltungen finden sich in den Unteransprüchen.

Nachfolgenden wird die vorliegende Erfindung beispielhaft mit Bezug auf die beiliegenden Figuren näher erläutert.

Es zeigen
- Figur 1:: Beispiel für ein Assistenz-System mit einer Planungseinrichtung für ein Automatisierungs-System;
- Figur 2:: beispielhafter Ablauf für das Trainieren eines beispielhaften neuronalen Netzes für ein Assistenz-System
- Figur 3:: beispielhafter Ablauf für das Generieren von Empfehlungen durch ein Assistenz-System
- Figur 4:: beispielhafter Aufbau eines neuronalen Netzes für ein Assistenz-System
- Figur 5:: Beispiel für einen Code-Bereich eines Auto-EncoderNeuronalen-Netzes innerhalb eines Assistenz-Systems
- Figur 6:: beispielhafter Aufbau und Ablauf zur Generierung eines Beispiels für einen Konfigurations-Vektor aus einem Konfigurationsdatensatz innerhalb eines Assistenz-Systems

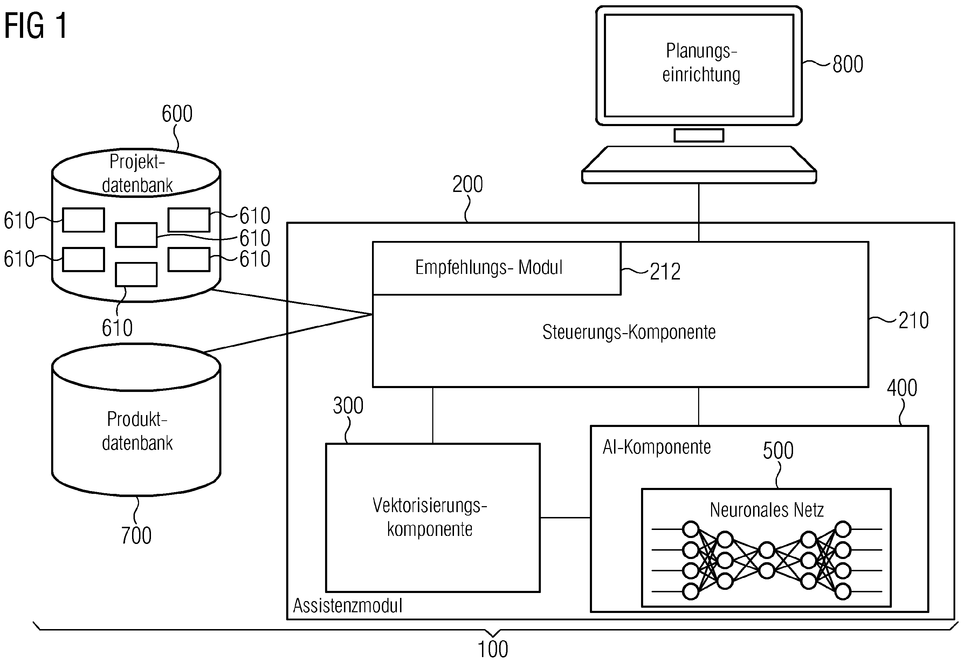

Figur 1 zeigt ein Assistenz-System 100 für eine Planungseinrichtung 800 für Automatisierungs-Systeme, wobei das Assistenz-System 100 ein Assistenz-Modul 200 und eine Projekt-Datenbank 600 umfasst.

Das Assistenz-Modul 200 umfasst dabei eine AI-Komponente 400, welche ein neuronales Netz 500 umfasst, welches eine Deep-Learning-Struktur aufweist. Zum Vorbereiten bzw. Vektorisieren von Daten zur nachfolgenden Verarbeitung durch die AI-Komponente 400 umfasst das Assistenz-Modul 200 weiterhin eine Vektorisierungs-Komponente 300, welche Daten von einer Steuerungs-Komponente 210 des Assistenz-Moduls 200 erhält. Die von der Steuerungs-Komponente 210 an die Vektorisierungs-Komponente 300 und über diese an die AI- Komponente 400 weitergegebenen Daten sind typischerweise Konfigurationsdaten für ein Automatisierungs-System (welches in Figur 1 nicht dargestellt ist), welches die Steuerungskomponente beispielsweise von der Planungseinrichtung 800 erhalten kann.

Die Planungseinrichtung kann dabei beispielsweise als sogenanntes "Engineering-System" ausgebildet und eingerichtet sein, wie es üblicherweise zum Einrichten von Automatisierungs-Systemen verwendet wird.

Weiterhin können Konfigurationsdaten für die AI-Komponente 400 auch von der Projektdatenbank 600 über die Steuerungskomponente 210 und die Vektorisierungs-Komponente 300 zur AI-Komponente 400 gelangen. Dabei umfasst die Projektdatenbank 600 Konfigurationsdatensätze 610, von welchen sechs Stück in Figur 1 beispielhaft dargestellt sind. Die Konfigurationsdatensätze 610 umfassen jeweils Konfigurationsdaten, welche im Rahmen des Betriebs bestimmter Automatisierungs-Systeme verwendet wurden.

Dabei kann das Assistenz-Modul 200 beispielsweise einen Trainings-Betriebszustand aufweisen, innerhalb dessen beispielsweise ein Konfigurationsdatensatz 610 aus der Projekt-Datenbank 600 über die Steuerungskomponente 210 und die Vektorisierungs-Komponente 300 dem neuronalen Netz 500 der AI-Komponente 400 zugeleitet wird und mit diesem Konfigurationsdatensatz 610 das neuronale Netz 500 trainiert wird. Dabei kann das neuronale Netz 500 beispielsweise eine sogenannte "Auto-Encoder-Struktur" aufweisen oder umfassen, die beispielweise gemäß der vorliegenden Beschreibung ausgebildet und eingerichtet sein kann.

Das Training der Auto-Encoder-Struktur des neuronalen Netzes 500 kann dabei dann so erfolgen, dass der vektorisierte Konfigurationsdatensatz 610 aus der Projekt-Datenbank 600 am Eingang der Auto-Encoder-Struktur des neuronalen Netzes 500 eingegeben wird und dann entsprechende Parameter von Knoten und Knotenverbindungen der Auto-Encoder-Struktur derart angepasst werden, dass die an einem Ausgang der Auto-Encoder-Struktur des neuronalen Netzes 500 ausgegebenen Daten den eingegebenen Daten entsprechen, oder diesen zumindest näherungsweise entsprechen. Diese Vorgehensweise zum Anlernen einer solchen Auto-Encoder-Struktur kann beispielsweise weiterhin gemäß der vorliegenden Beschreibung ausgestaltet sein. Ein solches Training des neuronalen Netzes 500 kann dann beispielsweise für alle Konfigurationsdatensätze 610 der Projekt-Datenbank erfolgen, wonach dann ein entsprechend trainiertes neuronales Netz 500 in der AI-Komponente 400 vorliegt.

Ein solches trainiertes neuronales Netz 500 innerhalb der AI-Komponente 400 kann dann zum Ermitteln von Empfehlungen für Konfigurationen von Automatisierungs-Systemen herangezogen werden. Dies kann beispielsweise so erfolgen, dass ein Nutzer der Planungseinrichtung 800 für ein bestimmtes vorgesehenes Automatisierungs-System eine Konfiguration in die Planungseinrichtung 800 eingibt. Diese Konfigurationsdaten werden dann von der Planungseinrichtung 800 an das Assistenz-Modul 200 übertragen und dort der Steuerungskomponente 210 zugeführt. In einem Empfehlungs-Betriebszustand des Assistenz-Moduls 200 kann die Steuerungskomponente dann diese eingegebenen Konfigurationsdaten der Vektorisierungs-Komponente 300 zuführen, welche aus den angegebenen Konfigurationsdaten dann einen Konfigurationsdaten-Vektor (entspricht den vektorisierten Konfigurationsdaten gemäß der vorliegenden Beschreibung) erstellt. Dies wird im Rahmen der späteren Figuren noch näher erläutert. Der Konfigurationsdaten-Vektor wird dann der AI-Komponente 400 zugeführt, und unter anderem in das neuronale Netz 500 dieser AI-Komponente 400 eingegeben.

Mit Hilfe des neuronalen Netzes wird dann beispielsweise ein Konfigurationsdatensatz 610 der Projektdatenbank 600 ermittelt, welcher den eingegebenen Konfigurationsdaten ähnlich oder mit diesen vergleichbar ist. Diese Information wird von der AI-Komponente 400 an die Steuerungskomponente 210 zurückübertragen. Die Steuerungskomponente 210 entnimmt die Konfigurationsdaten des ermittelten Konfigurationsdatensatzes 610 dann aus der Projektdatenbank 600 und kann dann unter Verwendung eines Empfehlungs-Moduls 212 Empfehlungen für Konfigurationsdaten für die Planungseinrichtung 800 ermitteln, welche die Steuerungskomponente 210 dann an die Planungseinrichtung 800 ausgibt. Diese Empfehlungen können dann beispielsweise über eine Anzeigeeinrichtung der Planungseinrichtung einem Benutzer ausgegeben bzw. angezeigt werden.

Entsprechende vom Assistenz-Modul 200 verarbeitete Konfigurationsdatensätze, beispielsweise Konfigurationsdatensätze 610 aus der Projektdatenbank 600, können beispielsweise Informationen zu Hardware-Komponenten des jeweiligen Automatisierungssystems umfassen, für welches die Konfigurationsdatensätze jeweils erstellt wurden. Solche Daten können beispielsweise Produkt-IDs, Bestellnummern, Produktnamen oder ähnliche Produkt-beschreibende -Daten sein. Das Assistenz-Modul kann dann weiterhin dazu ausgebildet sein, beispielsweise Bestell-informationen oder auch weitere Produkt-Informationen zu solchen Hardware-Komponenten an die Planungseinrichtung auszugeben oder auch unmittelbar mit Hilfe dieser Daten eine Bestellung bei einem entsprechenden Produkt-Lieferanten (nicht in Figur 1 dargestellt) auszulösen.

Dazu ist die Steuerungskomponente 210 des Assistenz-Moduls 200 mit einer Produkt-Datenbank 700 verbunden, über welche die Steuerungskomponente 210 dann die für die Bestellung einer bestimmten Hardware-Komponente notwendigen Produkt-Informationen abrufen kann. So kann die Steuerungskomponente 210 beispielsweise so ausgebildet sein, dass für einen bestimmten Konfigurationsdatensatz diejenigen Hardware-Komponenten ermittelt werden, zu welchen Informationen innerhalb des Konfigurationsdatensatzes vorhanden sind (in der Regel sind diese Hardware-Komponenten auch Bestandteile des dem Konfigurationsdatensatz zugrundeliegenden Automatisierungs-Systems). Es kann dann beispielsweise vorgesehen sein, dass durch eine entsprechende Nutzereingabe, beispielsweise in der Planungseinrichtung 800 oder auch unmittelbar am Assistenz-Modul 200, eine Bestellung für diese Hardware-Komponenten ausgelöst wird. Dazu ermittelt dann die Steuerungskomponente 210 zu den entsprechenden Hardware-Komponenten die notwendigen Bestell-informationen aus der Produkt-Datenbank 700 und übermittelt diese zur Bestellung an einen Lieferanten.

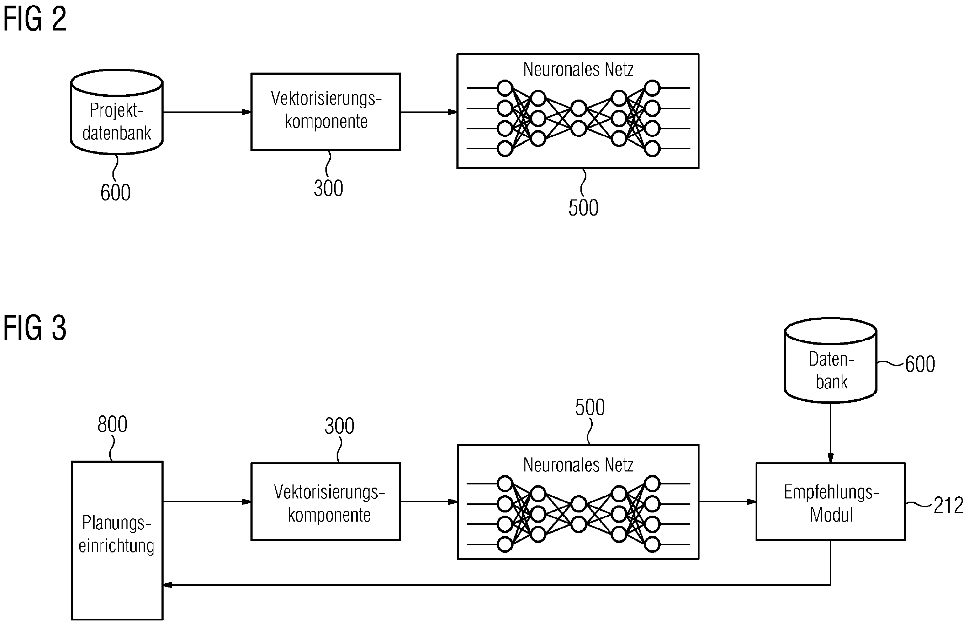

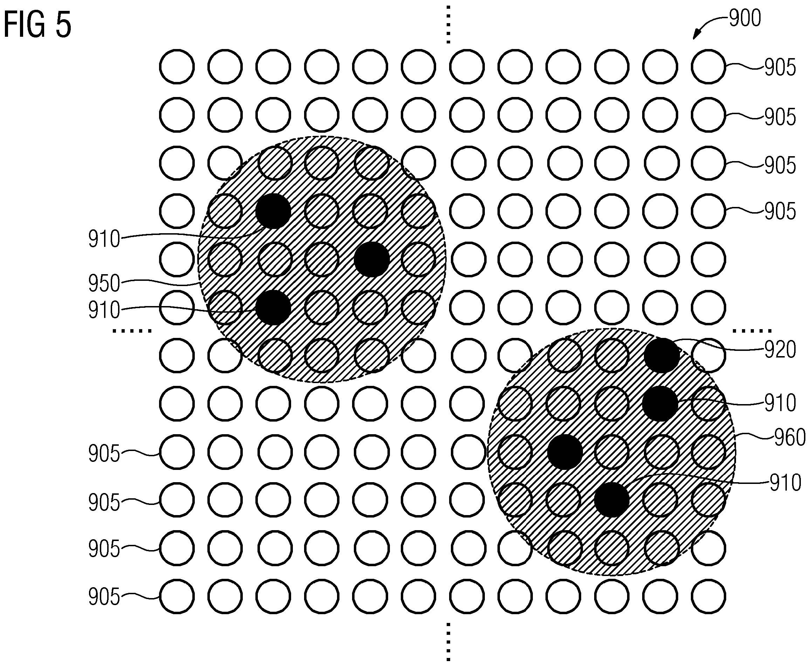

Figur 2 stellt eine Auswahl von Komponenten aus Figur 1 dar, welche beim Trainieren des neuronalen Netzes 500, beispielsweise im Rahmen eines Trainingszustandes gemäß der vorliegenden Beschreibung, wesentlich mitwirken. So wird zum Training des neuronalen Netzes 500 der AI-Komponente 400 (siehe Figur 1) beispielsweise ein Konfigurationsdatensatz 610 aus der Projektdatenbank 600 zur Vektorisierungs-Komponente 300 des Assistenz-Moduls 200 (siehe Figur 1) übertragen und durch die Vektorisierungs-Komponente 300 ein Konfigurationsdaten-Vektor erstellt wird. Hierauf wird mit Bezug auf Figur 5 beispielhaft noch näher eingegangen. Dieser Konfigurationsdaten-Vektor wird dann dem neuronalen Netz 500 der AI-Komponente 400 zugeführt.

In einer vorteilhaften Ausgestaltung ist das neuronale Netz als sogenannte Auto-Encoder-Struktur ausgelegt oder umfasst eine solche Auto-Encoder-Struktur. Entsprechende Auto-Encoder-Strukturen oder neuronale Netze können beispielsweise gemäß vorliegenden Beschreibung ausgestaltet und eingerichtet sein. Zum Training des neuronalen Netzes 500 mit der Auto-Encoder-Struktur wird der Konfigurationsdaten-Vektor in das neuronale Netz 500 eingegeben und dabei die Parameter der entsprechenden Netzknoten der Auto-Encoder-Struktur so bestimmt, dass die am Eingang der Auto-Encoder-Struktur eingegebenen Daten am Ausgang der Auto-Encoder-Struktur wieder reproduziert werden, oder zumindest näherungsweise wieder reproduziert werden. Dieser Ablauf kann beispielsweise gemäß der vorliegenden Beschreibung weiter ausgestaltet und eingerichtet sein. Diese Vorgehensweise kann dann auf diese Weise mit allen Konfigurationsdatensätzen 610 der Projektdatenbank 600 erfolgen. Danach ist das neuronale Netz 500 als ein trainiertes neuronales Netz 500 ausgebildet, welches dann beispielsweise zum Bestimmen von Empfehlungen für Konfigurationsdaten herangezogen werden kann.

Figur 3 stellt eine Auswahl von Komponenten aus Figur 1 dar, welche beim Ableiten solcher Empfehlungen für Konfigurationsdaten wesentlich mitwirken. Anhand von Figur 3 wird nachfolgend ein Erstellen einer solchen Empfehlung beispielhaft beschrieben. Dabei erstellt ein Nutzer der Planungseinrichtung 800 beispielsweise einen Entwurf für eine Konfiguration eines zu konfigurierenden Automatisierungs-Systems und übermittelt diese Daten an die Vektorisierungs-Komponente 300 des Assistenz-Systems 200. Der vom Nutzer erstellte Entwurf für die Konfiguration ist dabei ein Beispiel für einen Entwurfs-Konfigurationsdatensatz gemäß der vorliegenden Beschreibung. Durch die Vektorisierungs-Komponente 300 werden diese Entwurfs-Konfigurationsdaten dann in einen entsprechenden Entwurfs-Konfigurationsdatenvektor umgewandelt und dem neuronalen Netz 500 der AI-Komponente 400 des Assistenz-Systems 200 zugeführt.

Je nach Ausführung oder nach Struktur des neuronalen Netzes 500 wird nun die Reaktion des neuronalen Netzes 500 entsprechend ermittelt und an das Empfehlungsmodul 212 des Assistenz-Systems 200 ausgegeben. Wenn das neuronale Netz 500 beispielsweise als eine Auto-Encoder-Struktur ausgebildet ist oder eine solche umfasst, kann die Bestimmung der Reaktion des neuronalen Netzes 500 beispielsweise als die Ermittlung einer Lokalisierung in einem Code-Bereich des neuronalen Netzes 500 bestehen oder die Ermittlungen einer solchen Lokalisierung umfassen. Diese Lokalisierung kann dann beispielsweise an das Empfehlungs-Modul 212 ausgegeben werden, entweder für sich genommen oder im Zusammenhang mit weiteren Daten.

Im genannten Beispiel der Verwendung einer Auto-Encoder-Struktur im neuronalen Netz 500 kann weiterhin vorgesehen sein, dass den Konfigurationsdatensätzen 610 aus der Projektdatenbank 600 bereits ebenfalls Lokalisierungen in dem Code-Bereich der Auto-Encoder-Struktur des neuronalen Netzes 500 zugewiesen wurden. Dann können nun durch das Empfehlungsmodul 212 die für die Entwurfs-Konfigurationsdaten ermittelnde Lokalisierung mit den bekannten Lokalisierungen der Konfigurationsdaten 610 der Projektdatenbank 600 verglichen werden. Dabei können dann beispielsweise Lokalisierungen von Konfigurationsdatensätzen 610 aus der Datenbank 600 ermittelt werden, welche der Lokalisierung, die den Entwurfs-Konfigurationsdaten entspricht, benachbart sind. Auch diese Vorgehensweise kann beispielsweise gemäß der vorliegenden Beschreibung ausgebildet und eingerichtet sind. So kann beispielsweise das Empfehlungsmodul 212 eine der Lokalisierung des Entwurfs-Konfigurationsdatensatzes nächstliegende Lokalisierung ermitteln, dann den dieser Lokalisierung entsprechenden Konfigurationsdatensatz 610 aus der Projektdatenbank 600 ermitteln und diesen Konfigurationsdatensatz 610 dann aus der Projektdatenbank 600 anfordern. Diese Daten werden dann von der Projektdatenbank 600 an das Empfehlungsmodul 212 übertragen. Dieser an das Empfehlungsmodul übertragene Konfigurationsdatensatz ist ein Beispiel für einen Empfehlungs-Konfigurationsdatensatz.

Die Erarbeitung von Empfehlungen für die Planungseinrichtung 800 kann dann beispielsweise auf verschiedene Weise erfolgen.

In einer ersten Empfehlungs-Art kann das Empfehlungsmodul beispielsweise jeweils zu bestimmten Konfigurationsdaten des eingegebenen Konfigurations-Entwurfs die entsprechenden Daten aus dem Konfigurationsdatensatz 610 der Projektdatenbank 600 auswählen. Dieser entsprechende Konfigurationsdatensatz 610 aus der Projektdatenbank 600 wird nachfolgend als "Empfehlungs-Konfigurationsdatensatz 610 bezeichnet. Diese entsprechenden Daten werden dann an die Planungseinrichtung 800 übertragen und beispielsweise auf einem Bildschirm der Planungseinrichtung z.B. räumlich benachbart zu den ursprünglich eingegebenen Daten angezeigt. Auf diese Weise kann ein Nutzer der Planungseinrichtung beispielsweise erkennen, was bei einem vergleichbaren Automatisierungssystem an Konfigurationsdaten verwendet wurde um dann beispielsweise Ähnlichkeiten und Unterschiede zu erkennen. Auf diese Weise erhält er eine Unterstützung bei der Planung der Konfiguration des aktuellen Automatisierungssystems und kann so leichter feststellen, wo mögliche Fehlerquellen der bestehenden Konfiguration sein könnten.

Weiterhin kann das Empfehlungsmodul 212 auch Unterschiede zwischen den Konfigurationsdaten des aktuellen Entwurfs und den entsprechenden Daten des Empfehlungs-Konfigurationsdatensatzes 610 bestimmen. Dann können z.B. solche Werte an die Planungseinrichtung übertragen werden, welche diesen Unterschied charakterisieren und welche dann im Zusammenhang mit den entsprechenden Konfigurationsdaten beispielsweise auf einer Anzeigeeinrichtung der Planungseinrichtung 800 räumlich benachbart zu den entsprechenden Konfigurationsdaten des aktuellen Entwurfs dargestellt werden können. Auf diese Weise kann ein Nutzer beispielsweise relativ einfach erkennen, wo Unterschiede zwischen seiner aktuellen Konfiguration und einer vergleichbaren Konfiguration eines vergleichbaren Automatisierungs-Systems bestehen. Insbesondere wenn in der Datenbank 600 nur oder zumindest im wesentlichen Konfigurationsdatensätze 610 gespeichert sind, welche ablauffähige oder funktionierende Konfigurationen für bestimmte Automatisierungs-Systeme darstellen, kann der Nutzer auf diese Weise relativ einfach Hinweise auf Fehlerquellen entdecken, welche die Funktionsfähigkeit des aktuellen Entwurfs der Konfigurationsdaten innerhalb des entsprechenden Automatisierungs-Systems beeinträchtigen könnten.

Weiterhin kann auch vorgesehen sein, dass das Empfehlungs-Modul 212 Daten des Entwurfs-Konfigurationsdatensatzes mit denen des ermittelten Empfehlungs-Konfigurationsdatensatzes 610 vergleicht und weiterhin Daten aus dem Empfehlungs-Konfigurationsdatensatz 610 ermittelt, welchen keine Daten im Entwurfs-Konfigurationsdatensatz entsprechen oder zugeordnet sind und dann diese Daten an die Planungseinrichtung 800 überträgt, wobei diese dann auf einer entsprechenden Anzeigeeinrichtung dargestellt werden. Dies kann beispielsweise im Rahmen einer für solche Engineering-Systeme 800 typischen Eingabemasken für bestimmte Daten erfolgen. In diesem Fall kann beispielsweise eine entsprechende Eingabemaske teilweise mit den Entwurfs-Konfigurationsdaten ausgefüllt werden, wobei noch Datenfelder frei sind, in welche von dem Nutzer keine Daten eingegeben wurden. Nach Ermittlungen des Empfehlungs-Konfigurationsdatensatzes 610 können nun vom Empfehlungs-Modul beispielsweise die Daten ermittelt werden, welche den noch unbelegten Feldern der Eingabemaske entsprechen. Die diesen Feldern entsprechenden Daten werden dann aus dem Empfehlungs-Konfigurationsdatensatz 610 ermittelt, an die Planungseinrichtung 800, bzw. das Engineering-System 800 übertragen, wo diese Werte dann in den entsprechend zugeordneten Feldern der Eingabemaske angezeigt werden. Dies kann beispielsweise als ein Vervollständigen einer Eingabemaske oder eines Konfigurationsdatensatzes betrachtet werden.

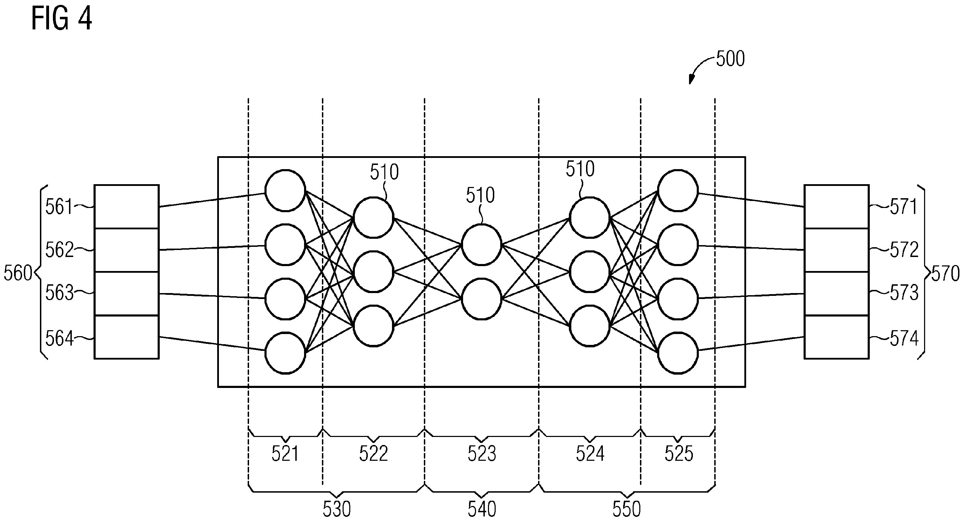

Figur 4 stellt ein Beispiel für eine Auto-Encoder-Struktur eines neuronalen Netzes 500 dar, wobei zur Vereinfachung der Darstellung der Struktur des Auto-Encoders 500 vergleichsweise wenige Knoten eingezeichnet wurden und aus Darstellungsgründen ein zwei-dimensionales neuronales Netz 500 gewählt wurde.

Der Auto-Encoder 500 weist sogenannte Knoten 510 auf, welche im dargestellten Beispiel in fünf Knotenschichten 521, 522, 523, 524, 525 strukturiert sind. Diese Knotenschichten 521 bis 525 werden in Figur 4 als übereinanderliegende Knoten 510 dargestellt. In Figur 4 sind nur einzelne der Knoten mit 510 mit einem Bezugszeichen gekennzeichnet, um die Darstellung zu vereinfachen. In Figur 4 links ist ein Eingabedaten-Vektor 560 mit vier Datenfeldern 561, 562, 563, 564 dargestellt, wobei jeweils ein Eingabefeld 561, 562, 563, 564 mit einem Knoten 510 der ersten Knotenschicht 521 des Auto-Encoders 500 verbunden ist und auf diese Weise Daten in den Auto-Encoder 510 eingegeben werden. Der Auto-Encoder 500 umfasst einen sogenannten Encodier-Bereich 530 welcher die ersten beiden Knotenschichten 521, 522 des Auto-Encoders 500 umfasst. Dabei ist jeder der Knoten der ersten Knotenschicht 521 mit jedem der Knoten der zweiten Knotenschicht 522 verbunden.

An den Encodier-Bereich 530 anschließend findet sich ein Code-Bereich 540, welcher aus einer Knotenschicht 523 besteht. Dabei ist wiederum jeder Knoten der zweiten Schicht 522 des Encodier-Bereichs 530 mit jedem Knoten der Code-Schicht 523 des Code-Bereichs 540 verbunden.

Anschließend an den Code-Bereich 540 weist die Auto-Encoder-Struktur einen Decodier-Bereich 550 auf, welcher wiederum aus zwei Knotenschichten 524, 525 besteht. Die letzte der Knotenschichten 525 ist wiederum mit Datenfeldern 571, 572, 573, 574 eines Ausgangsdaten-Vektors 570 verbunden.

Das Training des Autoencoders 500 kann nun beispielsweise so erfolgen, dass ein Eingangsdatensatz 560 in die erste Knotenschicht 521 des Encodierbereichs 530 eingegeben wird und dann über eines der für Autoencoder anwendbaren oder typischen Lernverfahren die Parameter der Knoten und Knoten-Verbindungen des Autoencoders 500 derart angepasst werden, dass der Ausgangsdatenvektor 570, der von der letzten Knotenschicht 525 des Dekodierbereichs 550 ausgegeben wird, dem Eingangsdatenvektor 560 entspricht, oder zumindest näherungsweise dem Eingangsdatenvektor 560 entspricht. Solche typischen Lernverfahren sind beispielsweise das so genannte "Backwards Propagation of Errors" ("Back Propagation") -Verfahren, konjugierte Gradientenmethoden ("Konjugate Gradient Methods"), ein so genannte "Restricted Bolzman Machine" -Mechanismus oder vergleichbare Mechanismen bzw. Kombinationen davon. Während des Trainings ermittelte Parameter eines neuronalen Netzes können beispielsweise eine Gewichtung einer Knoten-Verbindung bzw. eines Eingangswertes für einen Knoten ("Weight"), ein Vorspannungswert für einen Knoten ("Bias"), eine Aktivierungsfunktion für einen Netzknoten bzw. Parameter einer solchen Aktivierungsfunktion (z.B. "Sigmoid Function", "Logistic Function", "Activation Function"...) und/oder eine Aktivierungsschwelle für einen Netzknoten ("Threshold") oder vergleichbare Parameter sein.

Die vorstehend beschriebene Lernmethodik für den in Figur 4 dargestellten Autoencoder 500 ist ein Beispiel für so genanntes "unüberwachtes Lernen" (unsupervised learning).

Das in Figur 1 dargestellte neuronale Netz 500 der AI-Komponente 400 kann aber auch eine Netzwerkstruktur für überwachtes Lernen umfassen. Beispielsweise können auch Netzwerkstrukturen für überwachtes Lernen und unüberwachtes Lernen innerhalb des neuronalen Netzes 500 der AI-Komponente 400 gemäß Figur 1 kombiniert sein. Beispielsweise könnte das in Figur 1 dargestellte neuronale Netz 500 der AI-Komponente 400 eine Autoencoder-Struktur umfassen, wie sie beispielsweise in Figur 4 dargestellt ist, und/oder auch mehrere weitere Netzwerkstrukturen. Dabei kann die Autoencoder-Struktur sowohl was die Zahl der jeweils beteiligten Knoten als auch die Dimensionalität der Knotenschichten angeht, und auch was die Zahl der Knoten-Schichten angeht, von dem in Figur 4 dargestellten Beispiel für eine Autoencoder-Struktur 500 abweichen.

Bei der in Figur 4 dargestellten Autoencoder-Struktur handelt es sich um ein Beispiel für einen so genannten tiefen Auto-Encoder 500, da nicht alle der Knoten des Auto-Encoders 500 mit einem Ein- oder Ausgang der Autoencoder-Struktur 500 verbunden sind und es somit so genannte "versteckte Schichten" ("Hidden Layers") gibt.

Ganz allgemein können Autoencoder-Strukturen beispielsweise symmetrisch zum Codebereich aufgebaut sein. Dabei können weiterhin beispielsweise die Zahl der Knoten pro Knotenschicht von der Eingangsseite her bis zum Codebereich jeweils Schicht für Schicht abnehmen und dann zur Ausgangsseite hin wieder Schicht für Schicht zunehmen. Auf diese Weise hat dann die Schicht bzw. Schichten im Code-Bereich eine minimale Anzahl von Knoten im Rahmen der Autoencoder-Struktur. Der in Figur 4 dargestellte Auto-Encoder 500 ist ein Beispiel für einen solchen vorstehend beschriebenen symmetrischen Auto-Encoder.

Figur 5 zeigt ein Beispiel für eine Code-Schicht 900 einer Autoencoder-Struktur mit zweidimensionalen Knoten-Ebenen. Dabei zeigt Figur 5 nur einen Ausschnitt der Code-Schicht 900, was jeweils durch Punkte an den Rändern der dargestellten Codeschicht 900 symbolisiert ist. Die Codeschicht 900 umfasst Knoten 905, von welchen aus Übersichtlichkeitsgründen nur Einzelne in Figur 5 mit einem Bezugszeichen versehen sind. Eventuelle Verbindungen zwischen Knoten 905 der Codeschicht 900 sind in Figur 5 nicht eingezeichnet. Daher können Knoten 905 der Codeschicht 900 mit anderen Knoten 905 der Codeschichten 900 verbunden sein oder auch mit keinen anderen Knoten 905 der Codeschicht 900 verbunden sein.

In einer bevorzugten Ausgestaltung sind die Knoten 905 der Codeschicht 900 untereinander nicht verbunden, sondern nur mit Knoten von benachbarten Knotenebenen (solche benachbarten Knotenebenen sind in Figur 5 nicht dargestellt).

Einzelne der Knoten 905 der Codeschicht 900 sind in Figur 5 schwarz markiert und stellen Lokalisierungen 910 von Konfigurationsdatensätzen 610 der Projektdatenbank 600 gemäß Figur 1 dar. In Figur 5 ist dabei eine Lokalisierung 910 jeweils als ein spezifischer Netzknoten 905 symbolisiert. Aus Übersichtlichkeitsgründen sind nicht alle schwarz Markierten Lokalisierungen 610 in Figur 5 mit einem Bezugszeichen versehen.

Zur Ermittlung einer Lokalisierung 910 für einen bestimmten Konfigurationsdatensatz 610 aus der Projektdatenbank 600 kann beispielsweise dieser Konfigurationsdatensatz 610 mittels der Vektorisierungskomponente 300 in eine Konfigurationsvektor umgewandelt werden und dieser in ein neuronales Netz mit einer Autoencoder-Struktur eingegeben werden, wobei die Codeebene 900 in Figur 5 dann den Codebereich dieses Autoencoders darstellt. Nach Eingabe dieses Konfigurationsvektors in den Autoencoder werden dann ein oder mehrere Knoten 905 in der Codeschicht 900 des Codebereichs des Autoencoders aktiviert. Wird dabei nur ein Knoten aktiviert, so stellt dieser Knoten die entsprechende Lokalisierung 910 dar, welche dem eingegebenen Konfigurationsdatensatz 610 zugeordnet ist. Werden mehrere Netzknoten aktiviert, so wird die Lokalisierung 910 beispielsweise als ein Schwerpunkt, ein geometrischer oder räumlicher Mittelpunkt oder ähnlicher charakteristischer Bereich bzw. Ort für die aktivierten Knoten der Codeschicht 900 ermittelt. Der entsprechende Knoten 905 in Figur 5 stellt dann die Lokalisierung 910 dar, welche dem eingegebenen Konfigurationsdatensatz 610 zugeordnet ist.

Zur Ermittlung eines Empfehlungsdatensatzes gemäß der vorliegenden Beschreibung zu einem bestimmten Entwurfsdatensatz gemäß der vorliegenden Beschreibung kann beispielsweise der Entwurfsdatensatz wiederum durch die Vektorisierungskomponente 300 (s. z.B. Figur 1) in einen Entwurfs-Konfigurationsvektor umgewandelt werden, welcher dann in das neuronale Netz 500 (s. z.B. Figur 1) mit der Autoencoder-Struktur eingegeben wird, welche die in Figur 5 dargestellten Code-Knotenschicht 900 aufweist. Dann wird eine entsprechende Entwurfs-Lokalisierung 920 in der Codeschicht 900 des Autoencoders beispielsweise gemäß der vorstehend erläuterten Vorgehensweise ermittelt.

Zur Bestimmung einer entsprechenden Empfehlungs-Konfiguration kann nun beispielsweise diejenige Lokalisierung 910 zu den Konfigurations-Datensätzen 610 in der Codeschicht 900 ermittelt werden, welche der Entwurfs-Lokalisierung 920 am nächsten liegt. In Figur 5 ist dies der unmittelbar unterhalb der Entwurfs-Lokalisierung 920 liegende Knoten 910. Der dieser Lokalisierung 910 zugehörige Konfigurations-Datensatz 610 aus der Projektdatenbank 600 kann nun als Empfehlungs-Konfigurations-Datensatz an einen Nutzer ausgegeben werden oder zur weiteren Verarbeitung für einen Nutzer verwendet werden.

Es können alternativ beispielsweise auch mehrere nächstliegende Lokalisierungen 910 zur Entwurfslokalisierung 920 ermittelt werden und die entsprechenden Konfigurations-Datensätze dann einem Nutzer ausgegeben werden oder zur weiteren Verarbeitung herangezogen werden.

Weiterhin ist in Figur 5 ein erster Clusterbereich 950 sowie ein zweiter Clusterbereich 960 dargestellt, wobei jeder der Clusterbereiche 950, 960 einer Häufung von Lokalisierungen 910 innerhalb der Codeschicht 900 zugeordnet ist. Wenn beispielsweise eine Nachbarschaft von Lokalisierungen 910 in der Codeschicht 900 einer Ähnlichkeit der entsprechenden Konfigurationsdatensätze 610 bzw. zur Entwurfslokalisierung 920 entspricht, so entspricht jeder der Clusterbereiche 950, 960 dann einem gewissen Typus von Konfigurations-Datensätzen 610 bzw. einem gewissen Typus der diesen Konfigurations-Datensätzen 610 jeweils zugrundeliegenden Automatisierungs-Systeme. Dabei ist dem ersten Clusterbereich 950 dann beispielsweise ein erster Automatisierungs-System-Typus und dem Clusterbereich 960 ein zweiter Automatisierungssystem-Typus zugeordnet. Bei der Ermittlung des Empfehlungs-Konfigurationsdatensatzes vermittels der Ermittlung der Empfehlungs-Lokalisierung 920 kann dann beispielsweise mit dem einen oder mehreren Empfehlungs-Konfigurationsdatensatz 610 auch die Information ausgegeben werden, dass der zugrundeliegende Entwurfs-Konfigurations-Datensatz und/oder der eine oder mehrere Empfehlungs-Konfigurations-Datensatz 610 dem zweiten Automatisierungssystem-Typus zugeordnet sind, wie dies aus dem in Figur 5 dargestellten Beispiel hervorgeht.

Die Clusterbereiche 950, 960 können beispielsweise nach der Bestimmung der Lokalisierungen 910 der Konfigurations-Datensätze 610 durch entsprechende Cluster-Erkennungs-Verfahren (Verfahren z. B. einem so genannten k-nearest-neighbour-Verfahren oder vergleichbaren Verfahren) ermittelt werden. Weiterhin können nach einer solchen Bestimmung der Cluster 950, 960 mehrere oder alle einem bestimmten Cluster 950, 960 zugehörigen Lokalisierungen 910 herangezogen werden, um mittels der entsprechend zugeordneten Konfigurationsdatensätze einen für den jeweiligen Clusterbereich 950, 960 typischen "Standard-Konfigurations-Datensatz" oder auch "Template-Konfigurations-Datensatz" zu erzeugen.

Dies kann beispielsweise geschehen, indem durch Vergleich entsprechender Daten der verschiedenen einem Cluster zugehörigen Konfigurations-Datensätze z.B. jeweils der Wert bzw. das Daten-Element gewählt wird, welches mehrheitlich in den Datensätzen vorkommt. Weiterhin kann bei numerischen Daten beispielsweise auch ein Mittelwert der entsprechenden Daten der verschiedenen Konfigurations-Datensätze als Wert im Template-Konfigurations-Datensatz verwendet werde. Zudem kann auch ein bestimmtes Daten-Element im Template-Konfigurations-Datensatz durch eine manuelle Auswahl eines Benutzer aus den entsprechenden Daten der einzelnen Konfigurationsdatensätze erzeugt werden.

Die dargestellten Vorgehensweisen können dann z.B. auch beliebig kombiniert werden, um den Template-Konfigurations-Datensatz zu erzeugen. Es kann weiterhin auch vorgesehen sein, dass der genannte Template-Konfigurations-Datensatz nur Teile der für eine Konfiguration eines Automatisierungssystems notwendigen Informationen umfasst. Auch ist es möglich, dass ein Entwurfs-Konfigurations-Datensatz nicht nur einer, sondern mehreren Lokalisierungen 910 zugeordnet wird.

Nach der Ermittlung der Lokalisierung des Entwurfs-Konfigurations-Datensatzes 920 kann dann beispielsweise auch ermittelt und kommuniziert werden, dass diese Entwurfs-Lokalisierung dem zweiten Clusterbereich 960 zugehörig ist. Nachfolgend kann dann beispielsweise der dem zweiten Clusterbereich 960 entsprechende Template-Konfigurations-Datensatz abgerufen und z.B. auch einem Nutzer ausgegeben werden.

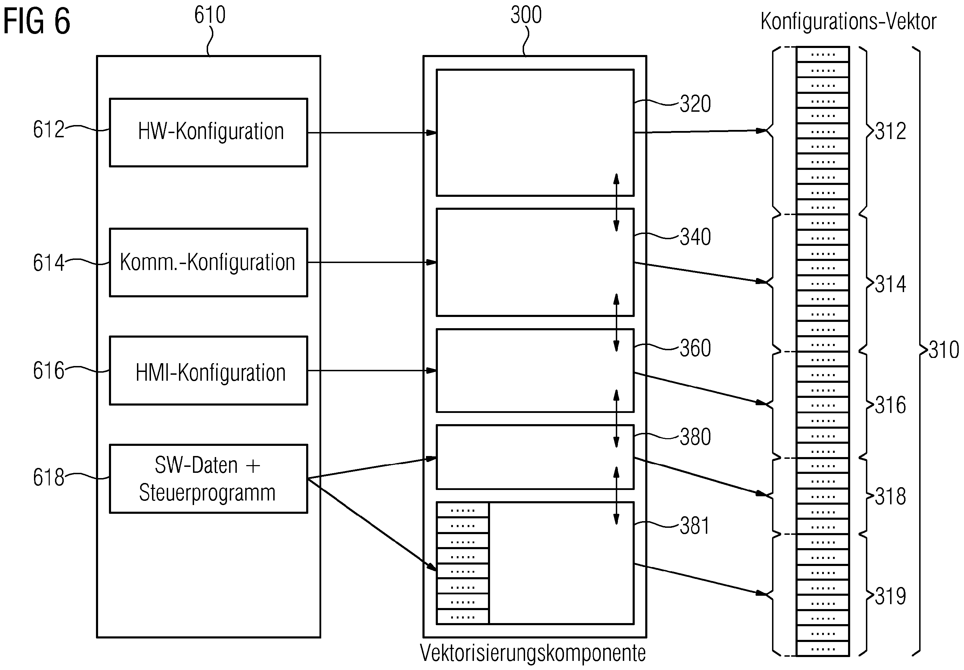

Figur 6 zeigt eine beispielhafte Ausgestaltung für die Vektorisierungskomponente 300 gemäß Figur 1, 2 und/oder 3 in Zusammenhang mit einer entsprechenden beispielhaften Ausgestaltung des Konfigurations-Datensatzes 610 gemäß Figur 1. Dabei umfasst der Konfigurations-Datensatz 610 einen Hardware-Konfigurations-Datenblock 612, welcher Hardwaredaten für das zugehörige Automatisierungssystems umfasst. Dabei können die Hardware-Daten beispielsweise gemäß der vorliegenden Beschreibung ausgebildet und eingerichtet sein. Weiterhin umfasst der Konfigurations-Datensatz 610 einen Kommunikations-Konfigurations-Datenblock 614, welcher Kommunikationsdaten für das zugehörige Automatisierungssystems umfasst. Dabei können die Kommunikationsdaten gemäß der vorliegenden Beschreibung ausgebildet und eingerichtet sein. Der Konfigurations-Datensatz 610 umfasst auch einen HMI-Konfigurations-Datenblock 616, welcher HMI-Daten bezüglich der Ausgestaltung von Benutzerschnittstellen des zugehörigen Automatisierungssystems umfasst. Dabei können die HMI-Daten ebenfalls wieder gemäß der vorliegenden Beschreibung ausgestaltet und eingerichtet sein. Der Konfigurations-Datensatz 610 umfasst weiterhin einen Software-Datenblock 618, welcher Informationen zur implementierten Software, deren Parameter und/oder ein- oder mehrere Steuerprogramme für das zugehörige Automatisierungssystem umfasst. Dabei können die Software-Daten sowie die Steuerprogramme ebenfalls wieder gemäß der vorliegenden Beschreibung ausgestaltet und eingerichtet sein.

Vermittels der Vektorisierungskomponente 300 wird dann aus dem Konfigurations-Datensatz 610 ein Konfigurationsvektor 310 erzeugt, welcher dann für die Eingabe in die AI-Komponente 400 und/oder das neuronale Netz 500 der AI-Komponente 400 verwendet wird (zur Darstellung dieser Komponenten s. z.B. Fig. 1). Der Konfigurations-Vektor 310 weist wiederum einen Hardware-Datenbereich 312, einen Kommunikations-Datenbereich 314, einen HMI-Datenbereich 316 sowie einen ersten Software-Datenbereich 318 und einen zweiten Software-Datenbereich 319 auf. Dabei sind dem ersten Software-Datenbereich 318 Informationen zu der verwendeten Software (z. B. ein Firmware-Stand, ein Betriebssystem-Typus, eine Software-Konfiguration, vorhandene Software-Bausteine, usw.) zugeordnet, während der zweite Software-Datenbereich 319 des Konfigurationsvektors 310 für vektorisierte Daten aus einem oder mehreren Steuerprogrammen für das Automatisierungssystem vorgesehen ist.

Die Vektorisierungskomponente 300 umfasst nun ein Hardware-Daten-Vektorisierungsmodul 320, welches dazu ausgebildet und eingerichtet ist, Daten des Hardware-Konfigurationsblocks 612 des Konfigurations-Datensatzes 610 in die vektorisierten Hardwaredaten 312 des Konfigurationsvektors 310 umzuwandeln.

Entsprechend umfasst die Vektorisierungskomponente ein Kommunikationsdaten-Vektorisierungsmodul 340, welches zur Umwandlung von Daten aus dem Kommunikationsdatenblock 614 des Konfigurations-Datensatzes 610 in entsprechende vektorisierte Kommunikationsdaten 314 des Kommunikationsvektors 310 umwandelt.

Die Vektorisierungskomponente 300 umfasst auch ein HMI-Daten-Vektorisierungsmodul 360, durch welches Daten des HMI-Konfigurationsdatenblocks 616 des Konfigurations-Datensatzes 610 in entsprechend vektorisierte HMI-Konfigurationsdaten 316 des Konfigurationsvektors 310 umgewandelt werden.

Weiterhin umfasst die Vektorisierungskomponente ein Software-Daten-Vektorisierungsmodul 380 sowie ein Programmcode-Vektorisierungsmodul 381. Dabei werden mit dem Software-Daten-Vektorisierungsmodul 380 solche Daten aus dem Software-Datenblock 618 des Konfigurations-Datensatzes 610, welche Informationen zur innerhalb des Automatisierungssystems verwendeten Software enthalten, in entsprechende Software-Daten 318 des Konfigurations-Vektors 310 umgewandelt.

Mittels des Programmcode-Vektorisierungsmoduls 381 wird der Programmcode von ein oder mehreren Steuerungsprogrammen für das entsprechende Automatisierungssystem in die entsprechenden vektorisierten Programmcode-Daten 319 des Konfigurationsvektors umgewandelt. In Figur 6 ist dies derart dargestellt, dass die einzelnen Programmschritte eines Steuerungsprogramms durch kleine Kästchen innerhalb des Programmcode-Vektorisierungsmoduls 381 dargestellt sind, welche dann beispielsweise mit Methoden des sogenannten "Natural Language-Processing" (NLP) und/oder mit Methoden der Sprach-, Text- oder auch Informationserkennung in die entsprechend vektorisierten Steuerprogrammdaten 319 umgewandelt werden. Dabei kann beispielsweise das Programmcode-Vektorisierungsmodul 381 ebenfalls ein neuronales Netz bzw. neuronale-Netz-Komponenten umfassen. Auch die anderen Vektorisierungsmodule 320, 340, 360 und 380 können entsprechend neuronale Netzstrukturen umfassen.

Weiterhin ist in Figur 6 durch Pfeile zwischen den verschiedenen Vektorisierungsmodulen 320, 340, 360, 380, 381 symbolisiert, dass die Vektorisierungsmodule 320, 340, 360, 380, 381 der Vektorisierungskomponente 300 jeweils zur Kommunikation mit jeweils anderen der Vektorisierungsmodule 320, 340, 360, 380, 381 ausgebildet und eingerichtet sind. Eine solche Kommunikation zwischen den einzelnen Modulen 320, 340, 360, 380, 381 kann beispielsweise dazu verwendet werden, um logisch zusammengehörige Daten aus den verschiedenen Datenblöcken 612, 614, 616, 618 des Konfigurations-Datensatzes 610 entsprechend einheitlich oder koordiniert zu vektorisieren.

Dadurch ist es unter anderem ganz generell möglich, dass der Konfigurations-Vektor 310 Einträge besitzt, in die eine Kombination von Daten aus mehreren Datenblöcken 612, 614, 616, 618 des Konfigurations-Datensatzes 610 einfließt.

So können beispielsweise Daten bezüglich einer bestimmten Kommunikations-Schnittstelle sowohl im Hardware-Konfigurationsdatenblock 612 als auch im Kommunikations-Konfigurationsdatenblock 614 vorhanden sein, die dann durch die Kommunikation zwischen dem Hardware-Vektorisierungsmodul 320 und dem Kommunikationsdaten-Vektorisierungsmodul 340 entsprechend abgeglichen und einheitlich vektorisiert werden können (z.B. im Rahmen der Vektorisierung mit einer einheitlichen Kennung oder Bezeichnung versehen werden können). Entsprechend können beispielsweise zu Ein- und/oder Ausgabedaten für das Automatisierungssystem sowohl Informationen innerhalb des HMI-Konfigurationsdatenblocks 616 als auch des Software-Datenblocks 618 des Konfigurations-Datensatzes vorhanden sein, welche dann durch Kommunikation der entsprechenden Vektorisierungsmodule 360, 380, 381 wieder entsprechend zur Vektorisierung abgeglichen werden können. Daten beispielsweise bezüglich einer bestimmten Darstellung von ein- oder auszugebenden Werten können z.B. im HMI-Konfigurationsdatenblock 616 und im Hardware-Konfigurationsdatenblock 612 (z. B. bezüglich eines bestimmten Ein- oder Ausgabe-Devices) des Konfigurationsdatensatzes 610 vorhanden sein. Auch hier kann durch Kommunikation der entsprechenden Vektorisierungsmodule 360, 320 ein Abgleich bzw. eine Koordination der Daten im Rahmen der Vektorisierung stattfinden.

## Patentansprüche

1. Assistenzsystem (100) zur Unterstützung der Planung von einem Automatisierungssystem, wobei es sich bei dem Automatisierungssystem um eine elektronische Einrichtung und/ oder Datenverarbeitungseinrichtung handelt, welche zur Steuerung einer Maschine, eines Gerätes und/oder einer Anlage ausgebildet und eingerichtet ist, umfassend
- eine Konfigurationsdatenbank (600) umfassend Konfigurationsdatensätze (610) von Automatisierungssystemen, wobei jeweils ein Konfigurationsdatensatz (610) jeweils die Konfigurationsdaten eines vorgegebenen Automatisierungssystems umfasst,
- eine Vektorisierungs-Komponente (300) zur Strukturierung und Anpassung von Konfigurationsdatensätzen, wobei die Vektorisierungs-Komponente (300) zur Umwandlung der Konfigurationsdatensätze (610) der Konfigurationsdatenbank (600) in vektorisierte Konfigurationsdatensätze (310) ausgebildet und eingerichtet ist,
wobei das Assistenzsystem (100) weiterhin eine AI-Komponente (400) umfasst, die zum Verarbeiten der vektorisierten Konfigurationsdatensätze (310) mithilfe von Methoden der künstlichen Intelligenz und/oder des maschinellen Lernens ausgebildet und eingerichtet ist,
wobei die Verarbeitung der vektorisierten Konfigurationsdatensätze (310) durch die AI-Komponente (400) die Verwendung eines neuronalen Netzes (500) mit einer Deep-Learning-Architektur umfasst, wobei das Assistenzsystem (100) zur Ausführung eines Empfehlungs-Betriebszustands ausgebildet und eingerichtet ist, innerhalb dessen
- ein Entwurfs-Konfigurationsdatensatz dem Assistenzsystem (100) zugeführt wird,
- dieser vermittels der Vektorisierungs-Komponente (300) in einen vektorisierten Entwurfs-Konfigurationsdatensatz umgewandelt wird, und
- das Assistenzsystem (100) daraus unter Verwendung des neuronalen Netzes (500) einen Empfehlungs-Konfigurationsdatensatz (610) aus der Konfigurationsdatenbank (600) ermittelt,
und wobei weiterhin vom Assistenzsystem (100) zu Daten des Entwurfs-Konfigurationsdatensatzes
- jeweils zugehörige Daten des Empfehlungs-Konfigurationsdatensatzes und/oder
- eine Abweichung von jeweils zugehörigen Daten des Empfehlungs-Konfigurationsdatensatzes und/oder
- Daten des Entwurfs-Konfigurationsdatensatzes ergänzende Daten aus dem Empfehlungs-Konfigurationsdatensatz ausgegeben werden.

2. Assistenzsystem nach Anspruch 1,
**dadurch gekennzeichnet,**
**dass** neuronale Netz (500) als ein trainiertes neuronales Netz ausgebildet und eingerichtet ist, wobei insbesondere ein Training des neuronalen Netzes (500) zumindest teilweise mit der Konfigurationsdatenbank (600) entnommenen und vektorisierten Konfigurationsdatensätzen (610) durchgeführt wurde.

3. Assistenzsystem nach Anspruch 1 oder 2, **dadurch gekennzeichnet,**
**dass** das Assistenzsystem (100) zur Ausführung eines Trainings-Betriebszustands ausgebildet und eingerichtet ist, innerhalb dessen ein Training des neuronalen Netzes (500) mit einem Deep-Learning-Verfahren unter Verwendung von der Konfigurationsdatenbank (600) entnommenen und vektorisierten Konfigurationsdatensätzen (610) erfolgt.

4. Assistenzsystem nach einem der vorhergehenden Ansprüche, **dadurch gekennzeichnet,**
**dass** das Assistenzsystem (100)
- zur Erstellung eines Ergebnis-Konfigurationsdatensatzes unter Verwendung des Entwurfs- und des Empfehlungs-Konfigurationsdatensatzes und/oder zur Speicherung eines unter Verwendung des Entwurfs- und des Empfehlungs-Konfigurationsdatensatzes erstellten Empfehlungs-Konfigurationsdatensatzes, und
- zur Bestimmung von dem Ergebnis-Konfigurationsdatensatz zugehörigen Hardware-Komponenten,
- sowie insbesondere weiterhin zur Ermittlung von den bestimmten Hardware-Komponenten zugehörigen Bestellinformationen,
ausgebildet und eingerichtet ist.

5. Assistenzsystem nach einem der vorhergehenden Ansprüche, **dadurch gekennzeichnet,**
**dass** Konfigurationsdatensätzen (610) der Konfigurationsdatenbank (600) jeweils eine Bewertungs-Kenngröße zugeordnet ist und durch das Assistenzsystem (100) eine dem Empfehlungs-Konfigurationsdatensatz zugeordnete Empfehlungs-Bewertung ausgegeben wird.

6. Assistenzsystem nach Anspruch 5,
**dadurch gekennzeichnet,**
**dass** das Assistenzsystem (100) zur Ermittlung einer Entwurfs-Bewertung des Entwurfs-Konfigurationsdatensatzes unter Verwendung der Bewertungs-Kenngrößen der Konfigurationsdatensätze (610) der Konfigurationsdatenbank (600) ausgebildet und eingerichtet ist.

7. Assistenzsystem nach einem der vorhergehenden Ansprüche, **dadurch gekennzeichnet,**
**dass** das neuronale Netz (500) eine Autoencoder-Struktur aufweist, wobei die Autoencoder-Struktur insbesondere einen Enkodier-Bereich (530), einen daran gekoppelten Code-Bereich (540) sowie einen mit diesem Code-Bereich verbundenen Dekodier-Bereich (550, 900) aufweist.

8. Assistenzsystem nach Anspruch 7,
**dadurch gekennzeichnet,**
**dass** die Autoencoder-Struktur derart ausgebildet und eingerichtet ist, dass einem Konfigurationsdatensatz (610) der Konfigurationsdatenbank (600) eine Lokalisierung (910) im Code-Bereich (550, 900) des neuronalen Netzes (500) zugeordnet oder zuordenbar ist.

9. Assistenzsystem nach Anspruch 7 oder 8,
**dadurch gekennzeichnet,**
**dass** eine Entwurfs-Lokalisierung (920) des Entwurfs-Konfigurationsdatensatzes im Code-Bereich (550, 900) des neuronalen Netzes ermittelt wird und unter Verwendung von Lokalisierungen (910) von Konfigurationsdatensätzen (610) der Konfigurationsdatenbank (600) im Code-Bereich (550, 900) des neuronalen Netzes (500) der Empfehlungs-Konfigurationsdatensatz aus der Konfigurationsdatenbank (600) ermittelt wird.

10. Assistenzsystem nach Anspruch 8 oder 9,
**dadurch gekennzeichnet,**
**dass** die Lokalisierungen (910), die Konfigurationsdatensätzen (610) der Konfigurationsdatenbank (600) im Code-Bereich (550, 900) des Neuronalen Netzes (500) zugeordnet sind, weiterhin mindestens einem Cluster-Bereich (950, 960) zugeordnet sind, wobei das Assistenzsystem (100) weiterhin zur Ermittlung eines Cluster-Standardkonfigurationsdatensatzes aus einem Cluster-Bereich (950, 960) zugeordneten Konfigurationsdatensätzen ausgebildet und eingerichtet ist.

11. Assistenzsystem nach einem der vorhergehenden Ansprüche, **dadurch gekennzeichnet,**
**dass** mindestens einer der Konfigurationsdatensätze (610) der Konfigurationsdatenbank (600) und/oder der Entwurfs-Konfigurationsdatensatz Hardware-Daten (612) bezüglich Hardware-Einrichtungen des zugehörigen Automatisierungssystems umfasst und weiterhin die Vektorisierungs-Komponente (300) ein Hardware-Daten-Vektorisierungs-Modul (320) zur Strukturierung und Anpassung der Hardware-Daten (612) umfasst.

12. Assistenzsystem nach einem der vorhergehenden Ansprüche, **dadurch gekennzeichnet,**
**dass** mindestens einer der Konfigurationsdatensätze (610) der Konfigurationsdatenbank (600) und/oder der Entwurfs-Konfigurationsdatensatz Kommunikations-Daten (614) bezüglich der Kommunikation innerhalb des zugehörigen Automatisierungssystems umfasst und weiterhin die Vektorisierungs-Komponente (300) ein Kommunikations-Daten-Vektorisierungs-Modul (340) zur Strukturierung und Anpassung der Kommunikations-Daten (614) umfasst.

13. Assistenzsystem nach einem der vorhergehenden Ansprüche, **dadurch gekennzeichnet,**
**dass** mindestens einer der Konfigurationsdatensätze (610) der Konfigurationsdatenbank (600) und/oder der Entwurfs-Konfigurationsdatensatz Software-Daten (618) bezüglich einer Software-Konfiguration des zugehörigen Automatisierungssystems umfasst und weiterhin die Vektorisierungs-Komponente (300) ein Software-Daten-Vektorisierungs-Modul (380, 381) zur Strukturierung und Anpassung der Software-Daten (618) umfasst.

14. Assistenzsystem nach einem der vorhergehenden Ansprüche, **dadurch gekennzeichnet,**
**dass** mindestens einer der Konfigurationsdatensätze (610) der Konfigurationsdatenbank (600) und/oder der Entwurfs-Konfigurationsdatensatz HMI-Daten (616) bezüglich einer Konfiguration von Anzeigeeinrichtungen des zugehörigen Automatisierungssystems umfasst und weiterhin die Vektorisierungs-Komponente (300) ein HMI-Daten-Vektorisierungs-Modul (360) zur Strukturierung und Anpassung der HMI-Daten (616) umfasst.

15. Verfahren zur Trainieren eines Assistenzsystems nach einem der Ansprüche 1 bis 14, umfassend die Schritte:
- Auswahl eines Konfigurationsdatensatzes (610) aus der Konfigurationsdatenbank (600);
- Umwandeln des Konfigurationsdatensatzes (610) in einen vektorisierten Konfigurationsdatensatz (310) unter Verwendung der Vektorisierungs-Komponente (300);
- Eingabe des vektorisierten Konfigurationsdatensatzes (310) in das neuronale Netz (500) der AI-Komponente (400) des Assistenzsystems (100);
- Trainieren des Neuronalen Netzes (500) mit dem vektorisierten Konfigurationsdatensatz (310) unter Verwendung des Deep-Learning-Verfahrens.

16. Verfahren nach Anspruch 15,
**dadurch gekennzeichnet,**
**dass** das Neuronale Netz (500) eine Autoencoder-Struktur gemäß Anspruch 7 oder 8 umfasst, und das Trainieren des Neuronalen Netzes (500) derart erfolgt, dass die an einem Eingang des Encodier-Bereichs (530) eingegebenen Daten des vektorisierten Konfigurationsdatensatzes (310) an einem Ausgang des Dekodier-Bereichs (550) wieder vorliegen.

17. Verfahren zum Unterstützen der Planung eines Automatisierungssystems unter Verwendung eines Assistenzsystems (100) gemäß einem der Ansprüche 1 bis 14, umfassend die Schritte:
- Eingabe eines Entwurfs-Konfigurationsdatensatzes für das Automatisierungssystem,
- Umwandeln des Entwurfs-Konfigurationsdatensatzes in einen vektorisierten Entwurfs-Konfigurationsdatensatz unter Verwendung der Vektorisierungs-Komponente (300), und
- Eingabe des vektorisierten Entwurfs-Konfigurationsdatensatzes in das neuronale Netz (500) der AI-Komponente (400) des Assistenzsystems (100),
- Ermitteln eines Empfehlungs-Konfigurationsdatensatzes (610) aus der Konfigurationsdatenbank (600) durch Auswertung der Reaktion des neuronalen Netzes (500) auf den eingegebenen vektorisierten Entwurfs-Konfigurationsdatensatz,
wobei weiterhin zu Daten des Entwurfs-Konfigurationsdatensatzes
- jeweils zugehörige Daten des Empfehlungs-Konfigurationsdatensatzes und/oder
- eine Abweichung von jeweils zugehörigen Daten des Empfehlungs-Konfigurationsdatensatzes und/oder
- Daten des Entwurfs-Konfigurationsdatensatzes ergänzende Daten aus dem Empfehlungs-Konfigurationsdatensatz ausgegeben werden.

18. Verfahren nach Anspruch 17,
**dadurch gekennzeichnet,**
**dass** das neuronale Netz (500) eine Autoencoder-Struktur gemäß einem der Ansprüche 7 bis 10 umfasst und weiterhin das Ermitteln des Empfehlungs-Konfigurationsdatensatzes aus der Konfigurationsdatenbank (600) derart erfolgt, dass eine Entwurfs-Lokalisierung (920) des Entwurfs-Konfigurationsdatensatzes im Code-Bereich (550, 900) des neuronalen Netzes (500) ermittelt wird und unter Verwendung von Lokalisierungen (910) der Konfigurationsdatensätze (610) der Konfigurationsdatenbank (600) im Code-Bereich (550, 900) des neuronalen Netzes (500) der Empfehlungs-Konfigurationsdatensatz aus der Konfigurationsdatenbank (600) ermittelt wird.

## Claims

1. Assistance system (100) for assisting the planning of an automation system, wherein the automation system is an electronic device and/or data processing device that is designed and configured so as to control a machine, a device and/or an installation,
comprising
- a configuration database (600) comprising configuration datasets (610) of automation systems, wherein a respective configuration dataset (610) in each case comprises the configuration data of a predefined automation system,
- a vectorization component (300) for structuring and adjusting configuration datasets, wherein the vectorization component (300) is designed and configured so as to convert the configuration datasets (610) of the configuration database (600) into vectorized configuration datasets (310),
wherein the assistance system (100) furthermore comprises an AI component (400) that is designed and configured so as to process the vectorized configuration datasets (310) using artificial intelligence and/or machine learning methods, wherein the processing of the vectorized configuration datasets (310) by the AI component (400) comprises using a neural network (500) having a deep learning architecture, wherein the assistance system (100) is designed and configured so as to execute a recommended operating state, in which
- a draft configuration dataset is fed to the assistance system (100),
- said draft configuration dataset is converted into a vectorized draft configuration dataset by way of the vectorization component (300), and
- the assistance system (100) determines a recommended configuration dataset (610) from the configuration database (600) therefrom using the neural network (500),
and wherein,
in relation to data of the draft configuration dataset,
- respectively associated data of the recommended configuration dataset and/or
- a deviation from respectively associated data of the recommended configuration dataset and/or
- data from the recommended configuration dataset that supplement data of the draft configuration dataset are furthermore output by the assistance system (100).

2. Assistance system according to Claim 1,
**characterized**
**in that** the neural network (500) is designed and configured as a trained neural network, wherein in particular training of the neural network (500) has been performed at least partly with vectorized configuration datasets (610) taken from the configuration database (600).

3. Assistance system according to Claim 1 or 2, **characterized**
**in that** the assistance system (100) is designed and configured so as to execute a training operating state in which the neural network (500) is trained with a deep learning method using vectorized configuration datasets (610) taken from the configuration database (600).

4. Assistance system according to one of the preceding claims,
**characterized**
**in that** the assistance system (100) is designed and configured
- so as to create a result configuration dataset using the draft configuration dataset and recommended configuration dataset and/or so as to store a recommended configuration dataset created using the draft configuration dataset and
recommended configuration dataset, and
- so as to determine hardware components associated with the result configuration dataset,
- and furthermore in particular so as to determine order information associated with the particular hardware components.

5. Assistance system according to one of the preceding claims,
**characterized**
**in that** configuration datasets (610) of the configuration database (600) are in each case assigned an assessment characteristic variable, and a recommended assessment assigned to the recommended configuration dataset is output by the assistance system (100).

6. Assistance system according to Claim 5,
**characterized**
**in that** the assistance system (100) is designed and configured so as to determine a draft assessment of the draft configuration dataset using the assessment characteristic variables of the configuration datasets (610) of the configuration database (600).

7. Assistance system according to one of the preceding claims,
**characterized**
**in that** the neural network (500) has an auto-encoder structure, wherein the auto-encoder structure in particular has an encoding region (530), a code region (540) coupled thereto and a decoding region (550, 900) connected to this code region.

8. Assistance system according to Claim 7,
**characterized**
**in that** the auto-encoder structure is designed and configured such that a location (910) in the code region (550, 900) of the neural network (500) is assigned or is able to be assigned to a configuration dataset (610) of the configuration database (600) .

9. Assistance system according to Claim 7 or 8, **characterized**
**in that** a draft location (920) of the draft configuration dataset in the code region (550, 900) of the neural network is determined, and the recommended configuration dataset is determined from the configuration database (600) using locations (910) of configuration datasets (610) of the configuration database (600) in the code region (550, 900) of the neural network (500).

10. Assistance system according to Claim 8 or 9, **characterized**
**in that** the locations (910) that are assigned to configuration datasets (610) of the configuration database (600) in the code region (550, 900) of the neural network (500) are furthermore assigned to at least one cluster region (950, 960), wherein the assistance system (100) is furthermore designed and configured so as to determine a cluster standard configuration dataset from configuration datasets assigned to a cluster region (950, 960).

11. Assistance system according to one of the preceding claims,
**characterized**
**in that** at least one of the configuration datasets (610) of the configuration database (600) and/or the draft configuration dataset comprises hardware data (612) in relation to hardware devices of the associated automation system and the vectorization component (300) furthermore comprises a hardware data vectorization module (320) for structuring and adjusting the hardware data (612).

12. Assistance system according to one of the preceding claims,
**characterized**
**in that** at least one of the configuration datasets (610) of the configuration database (600) and/or the draft configuration dataset comprises communication data (614) in relation to the communication within the associated automation system and the vectorization component (300) furthermore comprises a communication data vectorization module (340) for structuring and adjusting the communication data (614).

13. Assistance system according to one of the preceding claims,
**characterized**
**in that** at least one of the configuration datasets (610) of the configuration database (600) and/or the draft configuration dataset comprises software data (618) in relation to a software configuration of the associated automation system and the vectorization component (300) furthermore comprises a software data vectorization module (380, 381) for structuring and adjusting the software data (618) .

14. Assistance system according to one of the preceding claims,
**characterized**
**in that** at least one of the configuration datasets (610) of the configuration database (600) and/or the draft configuration dataset comprises HMI data (616) in relation to a configuration of display devices of the associated automation system and the vectorization component (300) furthermore comprises an HMI data vectorization module (360) for structuring and adjusting the HMI data (616).

15. Method for training an assistance system according to one of Claims 1 to 14, comprising the steps:
- selecting a configuration dataset (610) from the configuration database (600);
- converting the configuration dataset (610) into a vectorized configuration dataset (310) using the vectorization component (300);
- inputting the vectorized configuration dataset (310) into the neural network (500) of the AI component (400) of the assistance system (100);
- training the neural network (500) with the vectorized configuration dataset (310) using the deep learning method.

16. Method according to Claim 15,
**characterized**
**in that** the neural network (500) comprises an auto-encoder structure according to Claim 7 or 8, and the neural network (500) is trained such that the data of the vectorized configuration dataset (310) that are input at an input of the encoding region (530) are present again at an output of the decoding region (550).

17. Method for assisting the planning of an automation system using an assistance system (100) according to one of Claims 1 to 14, comprising the steps:
- inputting a draft configuration dataset for the automation system,
- converting the draft configuration dataset into a vectorized draft configuration dataset using the vectorization component (300), and
- inputting the vectorized draft configuration dataset into the neural network (500) of the AI component (400) of the assistance system (100),
- determining a recommended configuration dataset (610) from the configuration database (600) by evaluating the response of the neural network (500) to the input vectorized draft configuration dataset,
wherein, in relation to data of the draft configuration dataset,
- respectively associated data of the recommended configuration dataset and/or
- a deviation from respectively associated data of the recommended configuration dataset and/or
- data from the recommended configuration dataset that supplement data of the draft configuration dataset are furthermore output.

18. Method according to Claim 17,
**characterized**
**in that** the neural network (500) comprises an auto-encoder structure according to one of Claims 7 to 10, and the recommended configuration dataset from the configuration database (600) is furthermore determined such that a draft location (920) of the draft configuration dataset in the code region (550, 900) of the neural network (500) is determined, and the recommended configuration dataset from the configuration database (600) is determined using locations (910) of the configuration datasets (610) of the configuration database (600) in the code region (550, 900) of the neural network (500).

## Revendications

1. Système d'assistance (100) permettant d'assister la planification d'un système d'automatisation, dans lequel le système d'automatisation est un dispositif électronique et/ou un dispositif de traitement de données qui est conçu et configuré afin de commander une machine, un appareil et/ou une installation,
comprenant :
- une base de données de configuration (600) comprenant des ensembles de données de configuration (610) de systèmes d'automatisation, dans lequel respectivement, un ensemble de données de configuration (610) comprend respectivement les données de configuration d'un système d'automatisation prédéterminé,
- un composant de vectorisation (300) permettant de structurer et d'adapter des ensembles de données de configuration, dans lequel le composant de vectorisation (300) est conçu et configuré afin de convertir les ensembles de données de configuration (610) de la base de données de configuration (600) en ensembles de données de configuration vectorisés (310),
dans lequel le système d'assistance (100) comprend en outre un composant IA (400) qui est conçu et configuré afin de traiter les ensembles de données de configuration vectorisés (310) en utilisant des méthodes d'intelligence artificielle et/ou d'apprentissage automatique,
dans lequel le traitement des ensembles de données de configuration vectorisés (310) par le composant AI (400) comprend l'utilisation d'un réseau neuronal (500) présentant une architecture d'apprentissage profond,
dans lequel le système d'assistance (100) est conçu et configuré afin d'exécuter un état de fonctionnement de préconisation, dans lequel
- un ensemble de données de configuration de conception est fourni au système d'assistance (100),
- celui-ci est converti en un ensemble de données de configuration de conception vectorisé au moyen du composant de vectorisation (300), et
- le système d'assistance (100) détermine un ensemble de données de configuration de préconisation (610) à partir de la base de données de configuration (600) en utilisant le réseau neuronal (500),
et dans lequel en outre du système d'assistance (100) aux données de l'ensemble de données de configuration de préconisation
- des données respectivement associées de l'ensemble des données de configuration de la recommandation, et/ou
- un écart par rapport aux données respectivement associées de l'ensemble de données de configuration de préconisation, et/ou
- des données de l'ensemble de données de configuration de conception sont produites à partir de l'ensemble de données de configuration de préconisation.

2. Système d'assistance selon la revendication 1,
**caractérisé en ce que**,
le réseau neuronal (500) est conçu et configuré sous la forme d'un réseau neuronal entraîné, dans lequel en particulier un apprentissage du réseau neuronal (500) est réalisé au moins partiellement avec les ensembles de données de configuration (610) extraits et vectorisés avec la base de données de configuration (600).

3. Système d'assistance selon la revendication 1 ou 2, **caractérisé en ce que**,
le système d'assistance (100) est conçu et configuré afin d'exécuter un état de fonctionnement d'apprentissage dans lequel le réseau neuronal (500) fait l'objet d'un apprentissage à l'aide d'un procédé d'apprentissage profond utilisant des ensembles de données de configuration vectorisés (610) extraits et vectorisés avec la base de données de configuration (600).

4. Système d'assistance selon l'une quelconque des revendications précédentes,
**caractérisé en ce que**,
le système d'assistance (100) est conçu et configuré
- afin de créer un ensemble de données de configuration de résultat en utilisant les ensembles de données de configuration de conception et de préconisation et/ou afin de stocker un ensemble de données de configuration de préconisation créé en utilisant les ensemble de données de configuration de conception et de préconisation, et
- afin de déterminer des composants matériels associés à l'ensemble de données de configuration de résultat,
- et en particulier afin de déterminer les informations de commande associées aux composants matériels spécifiques.

5. Système d'assistance selon l'une quelconque des revendications précédentes,
**caractérisé en ce que**,
les ensembles de données de configuration (610) de la base de données de configuration (600) se voient attribuer chacun à un paramètre d'évaluation et une évaluation de préconisation attribuée à l'ensemble de données de configuration de préconisation est émise par le système d'assistance (100).

6. Système d'assistance selon la revendication 5,
**caractérisé en ce que**,
le système d'assistance (100) est conçu et configuré afin de déterminer une évaluation de conception de l'ensemble de données de configuration de conception en utilisant les paramètres d'évaluation des ensembles de données de configuration (610) de la base de données de configuration (600).

7. Système d'assistance selon l'une quelconque des revendications précédentes,
**caractérisé en ce que**,
le réseau neuronal (500) présente une structure de codeur automatique, dans lequel la structure de codeur automatique présente, en particulier, une région de codage (530), une région de code (540) couplée à celle-ci et une région de décodage (550, 900) connectée à cette région de code.

8. Système d'assistance selon la revendication 7,
**caractérisé en ce que**,
la structure de codeur automatique est conçue et configurée de telle sorte qu'une localisation (910) dans la région de code (550, 900) du réseau neuronal (500) est ou peut être attribuée à un ensemble de données de configuration (610) de la base de données de configuration (600).

9. Système d'assistance selon la revendication 7 ou 8, **caractérisé en ce que**,
une localisation de conception (920) de l'ensemble de données de configuration de conception dans la région de code (550, 900) du réseau neuronal est déterminée et l'ensemble de données de configuration de préconisation est déterminé à partir de la base de données de configuration (600) en utilisant des localisations (910) d'ensembles de données de configuration (610) de la base de données de configuration (600) dans la région de code (550, 900) du réseau neuronal (500).

10. Système d'assistance selon la revendication 8 ou 9, **caractérisé en ce que**,
les localisations (910), qui sont associées aux ensembles de données de configuration (610) de la base de données de configuration (600) dans la région de code (550, 900) du réseau neuronal (500), sont également associées à au moins une région de grappe (950, 960), dans lequel le système d'assistance (100) est également conçu et configuré afin de déterminer un ensemble de données de configuration standard de grappe à partir d'ensembles de données de configuration associés à une région de grappe (950, 960).

11. Système d'assistance selon l'une quelconque des revendications précédentes,
**caractérisé en ce que**,
au moins un des ensembles de données de configuration (610) de la base de données de configuration (600) et/ou l'ensemble de données de configuration de conception comprend des données de matériel (612) relatives à des dispositifs matériels du système d'automatisation associé, et le composant de vectorisation (300) comprend en outre un module de vectorisation de données de matériel (320) permettant de structurer et d'adapter les données de matériel (612).

12. Système d'assistance selon l'une quelconque des revendications précédentes,
**caractérisé en ce que**,
au moins un des ensembles de données de configuration (610) de la base de données de configuration (600) et/ou l'ensemble de données de configuration de conception comprend des données de communication (614) relatives à la communication à l'intérieur du système d'automatisation associé, et le composant de vectorisation (300) comprend en outre un module de vectorisation de données de communication (340) permettant de structurer et d'adapter les données de communication (614).

13. Système d'assistance selon l'une quelconque des revendications précédentes,
**caractérisé en ce que**,
au moins un des ensembles de données de configuration (610) de la base de données de configuration (600) et/ou l'ensemble de données de configuration de conception comprend des données de logiciel (618) relatives à une configuration de logiciel du système d'automatisation associé, et le composant de vectorisation (300) comprend en outre un module de vectorisation de données de logiciel (380, 381) permettant de structurer et d'adapter les données de logiciel (618).

14. Système d'assistance selon l'une quelconque des revendications précédentes,
**caractérisé en ce que**,
au moins un des ensembles de données de configuration (610) de la base de données de configuration (600) et/ou l'ensemble de données de configuration de conception comprend des données IHM (616) relatives à une configuration de dispositifs d'affichage du système d'automatisation associé, et le composant de vectorisation (300) comprend en outre un module de vectorisation de données IHM (360) permettant de structurer et d'adapter les données IHM (616).

15. Procédé pour un apprentissage d'un système d'assistance selon l'une des revendications 1 à 14, comprenant les étapes consistant à :
- choisir un ensemble de données de configuration (610) à partir de la base de données de configuration (600) ;
- convertir l'ensemble de données de configuration (610) en un ensemble de configuration vectorisé (310) en utilisant le composant de vectorisation (300) ;
- entrer l'ensemble de données de configuration vectorisé (310) dans le réseau neuronal (500) du composant IA (400) du système d'assistance (100) ;
- amener le réseau neuronal (500) à effectuer un apprentissage avec l'ensemble de données de configuration vectorisé (310) en utilisant le procédé d'apprentissage profond.

16. Procédé selon la revendication 15,
**caractérisé en ce que**,
le réseau neuronal (500) comprend une structure de codeur automatique selon la revendication 7 ou 8, et l'apprentissage du réseau neuronal (500) est effectué de telle sorte que les données de l'ensemble de données de configuration vectorisé (310) entrées au niveau d'une entrée de la région de codage (530) sont à nouveau disponibles à une sortie de la région de décodage (550).

17. Procédé permettant d'assister la planification d'un système d'automatisation utilisant un système d'assistance (100) selon l'une quelconque des revendications 1 à 14, comprenant les étapes consistant à :
- entrer un ensemble de données de configuration de conception pour le système d'automatisation,
- convertir l'ensemble de données de configuration de conception en un ensemble de données de configuration de conception vectorisé en utilisant le composant de vectorisation (300), et
- entrer l'ensemble de données de configuration de conception vectorisé dans le réseau neuronal (500) du composant IA (400) du système d'assistance (100),
- déterminer un ensemble de données de configuration de préconisation (610) à partir de la base de données de configuration (600) en évaluant la réaction du réseau neuronal (500) à l'ensemble de données de configuration de conception vectorisé entré,
dans lequel, en plus de données de l'ensemble de données de configuration de conception
- des données respectivement associées de l'ensemble de données de configuration de préconisation, et/ou
- un écart par rapport aux données respectivement associées de l'ensemble de données de configuration de préconisation, et/ou
- des données de l'ensemble de données de configuration de conception sont produites à partir de l'ensemble de données de configuration de préconisation.

18. Procédé selon la revendication 17,
**caractérisé en ce que**,
le réseau neuronal (500) comprend une structure de codeur automatique selon l'une quelconque des revendications 7 à 10 et **en ce que** l'ensemble de données de configuration de préconisation est déterminé à partir de la base de données de configuration (600) de telle sorte qu'une localisation de conception (920) de l'ensemble de données de configuration de conception est déterminée dans la région de codage (550, 900) du réseau neuronal (500) et l'ensemble de données de configuration de préconisation est déterminé à partir de la base de données de configuration (600) en utilisant des localisations (910) des ensembles de données de configuration (610) de la base de données de configuration (600) dans la région de codage (550, 900).
